(19) Europäisches Patentamt
European Patent Office
Office européen des brevets

(11) EP 4 501 554 A1

(12) **EUROPEAN PATENT APPLICATION**
published in accordance with Art. 153(4) EPC

(43) Date of publication:
**05.02.2025 Bulletin 2025/06**

(21) Application number: **23779933.3**

(22) Date of filing: **22.03.2023**

(51) International Patent Classification (IPC):
***B25J 13/08*** *(2006.01)* ***B25J 15/08*** *(2006.01)*

(52) Cooperative Patent Classification (CPC):
**B25J 13/08; B25J 15/08**

(86) International application number:
**PCT/JP2023/011164**

(87) International publication number:
**WO 2023/189921 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.03.2022 JP 2022051535**

(71) Applicant: **Kyocera Corporation**
**Kyoto-shi, Kyoto 612-8501 (JP)**

(72) Inventors:
- **ONO Kazuki**
  **Kyoto-shi, Kyoto 612-8501 (JP)**
- **MIYAMURA Hiroaki**
  **Kyoto-shi, Kyoto 612-8501 (JP)**
- **ISHIDA Takayuki**
  **Kyoto-shi, Kyoto 612-8501 (JP)**

(74) Representative: **TBK**
**Bavariaring 4-6**
**80336 München (DE)**

# (54) HOLD CONTROL UNIT, CONTROL DEVICE, AND PROGRAM

(57) A holder controller controls a holder to hold an object with a protector between the holder and the object. The holder controller controls a holding force of the holder based on a viscoelastic characteristic of the protector.

FIG. 3

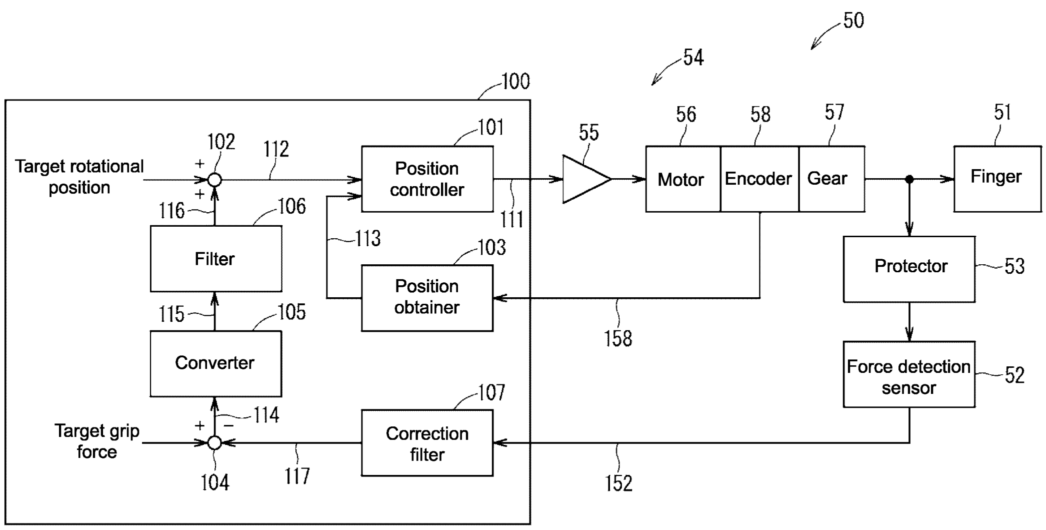




Processed by Luminess, 75001 PARIS (FR)

## Description

TECHNICAL FIELD

The present disclosure relates to a control technique.

BACKGROUND OF INVENTION

Patent Literature 1 describes a technique for robot control.

CITATION LIST

PATENT LITERATURE

Patent Literature 1: Japanese Unexamined Patent Application Publication No. 2013-113661

SUMMARY

One or more aspects of the present disclosure are directed to a holder controller, a control device, and a program. In one embodiment, a holder controller controls a holder to hold an object with a protector between the holder and the object. The holder controller controls a holding force of the holder based on a viscoelastic characteristic of the protector.

In one embodiment, a control device controls a holder to hold an object. The holder includes a sensor that detects a holding force of the holder holding the object, and a protector on a sensing portion included in the sensor. The sensor detects the holding force with the protector between the sensor and the object. The control device includes a holder controller that controls the holding force in response to a detection signal output from the sensor. The holder controller includes a correction filter. The correction filter performs first filtering on the detection signal to reduce an effect of a viscoelastic characteristic of the protector on the detection signal.

In one embodiment, a program causes a computer to function as the above holder controller.

In one embodiment, a program causes a computer to function as the above control device.

BRIEF DESCRIPTION OF THE DRAWINGS

FIG. 1 is a block diagram of an example control device.
FIG. 2 is a schematic diagram of an example robotic system.
FIG. 3 is a partial block diagram of the robotic system, illustrating its example structure.
FIG. 4 is a schematic diagram of an example robot hand.
FIG. 5 is a graph showing example temporal changes in grip forces.
FIG. 6 is a graph showing example temporal changes in the grip forces.
FIG. 7 is an example Bode plot.
FIG. 8 is an example Bode plot.
FIG. 9 is an example Bode plot.
FIG. 10 is an example Bode plot.
FIG. 11 is an example Bode plot.
FIG. 12 is a partial block diagram of the robotic system, illustrating its example structure.
FIG. 13 is a partial block diagram of the robotic system, illustrating its example structure.
FIG. 14 is a partial block diagram of the robotic system, illustrating its example structure.
FIG. 15 is a partial block diagram of the robotic system, illustrating its example structure.
FIG. 16 is a partial block diagram of the robotic system, illustrating its example structure.

DESCRIPTION OF EMBODIMENTS

FIG. 1 is a block diagram of a control device 1 that controls a holder for holding an object, illustrating its example structure. The control device 1 can control the holder included in, for example, a robot hand. Although the control device 1 controls the holder included in the robot hand in the example described below, the holder controlled by the control device 1 may be included in a device other than the robot hand.

FIG. 2 is a schematic diagram of an example robotic system 9 including the control device 1. The robotic system 9 according to the present embodiment includes, for example, a robot 3, the control device 1, and a control device 2. The control device 2 manages, for example, an overall operation of the robot 3 and is also referred to as a robot controller. The robot 3 includes, for example, an arm 4 and a robot hand 5 connected to the arm 4. The robot hand 5 includes a holder 50 that holds an object 8. The holder 50 holds the object 8 by, for example, gripping the object 8. The robot 3 can transfer the object 8 by, for example, moving the arm 4 with the holder 50 holding the object 8. The holder 50 that grips the object 8 may be hereafter referred to as a gripper 50. The holder 50 may hold the object 8 in a manner other than by gripping the object 8. For example, the holder 50 may hold the object 8 by suction. In this case, the holder 50 may be a suction portion.

The control device 2 can control, for example, the arm 4. The control device 1 can control, for example, the robot hand 5. More specifically, the control device 1 can control the gripper 50 in the robot hand 5. The control device 1 is also referred to as, for example, a hand controller. The control device 1 can control a grip force of the gripper 50 gripping the object 8. The grip force of the gripper 50 is also referred to as a holding force. The "grip force" hereafter can be replaced with the "holding force". The control device 1 may be located inside the robot hand 5, or outside the robot hand 5.

As illustrated in FIG. 1, the control device 1 includes, for example, a controller 10, a storage 11, and an interface 12. The control device 1 may be, for example, a control circuit. The control device 1 is, for example, a computer.

The interface 12 can transmit and receive a signal to and from the control device 2. The controller 10 can transmit and receive a signal to and from the control device 1 through the interface 12. The interface 12 may be, for example, an interface circuit.

The controller 10 can control other components of the control device 1 to centrally manage an operation of the control device 1. The controller 10 may be, for example, a control circuit. The controller 10 includes at least one processor that performs control and processing for implementing various functions, as described in more detail below.

In various embodiments, the at least one processor may be a single integrated circuit (IC), or multiple ICs, multiple discrete circuits, or both these circuits connected to one another for mutual communication. The at least one processor may be implemented using any of various known techniques.

In one embodiment, the processor includes one or more circuits or units configured to perform one or more data computation procedures or processes by, for example, executing instructions stored in an associated memory. In another embodiment, the processor may be firmware (e.g., a discrete logic component) configured to perform one or more data computation procedures or processes.

In various embodiments, the processor includes one or more processors, controllers, microprocessors, microcontrollers, application-specific integrated circuits (ASICs), digital signal processors (DSPs), programmable logic devices, field programmable gate arrays, combinations of any of these devices or configurations, or combinations of other known devices and configurations. The processor may perform the functions described below.

The controller 10 may include, for example, a central processing unit (CPU) as the processor. The storage 11 may include a non-transitory recording medium readable by the CPU in the controller 10, such as a read-only memory (ROM) and a random-access memory (RAM). The storage 11 may include, for example, a nonvolatile RAM (NVRAM) as a nonvolatile memory. The storage 11 stores, for example, a program 11a for controlling the control device 1. The various functions of the controller 10 are implemented by, for example, the CPU in the controller 10 executing the program 11a in the storage 11.

Note that the controller 10 may have any structure other than the above example structure. For example, the controller 10 may include multiple CPUs. The controller 10 may also include at least one DSP. The functions of the controller 10 may be implemented entirely or partially by a hardware circuit, without using software to implement the functions. The storage 11 may also include a non-transitory computer-readable recording medium other than the ROM and the RAM. The storage 11 may include, for example, a small hard disk drive and a solid-state drive (SSD).

The CPU in the controller 10 executes the program 11a in the storage 11 to implement, as a functional block, a holder controller 100 in the controller 10 that controls the holder 50 in the robot hand 5. The holder controller 100 that controls the holder 50, or the gripper 50, that grips the object 8 is also referred to as a grip controller 100.

FIG. 3 is a partial block diagram of the robotic system 9, illustrating its example structure. FIG. 4 is a schematic diagram of the robot hand 5, illustrating its example structure. As illustrated in FIGs. 3 and 4, the gripper 50 includes, for example, multiple fingers 51, a force detection sensor 52, multiple protectors 53, and a drive 54 that drives the fingers 51. Although the gripper 50 includes the two fingers 51 in the robotic system 9 described below, the gripper 50 may include three or more fingers 51.

The two fingers 51 are movable toward or away from each other. In other words, the two fingers 51 can open and close. The drive 54 drives the two fingers 51 to move toward or away from each other. The gripper 50 can hold the object 8 with the two fingers 51 or release the object 8 from the two fingers 51.

The force detection sensor 52 is located to detect the grip force of the gripper 50 gripping the object 8. In the present embodiment, for example, the gripper 50 can grip the object 8 at ends of the fingers 51. The force detection sensor 52 is, for example, at the ends of the fingers 51. The force detection sensor 52 can detect the holding force of the holder 50 holding the object 8. In the present embodiment, the force detection sensor 52 can detect the grip force of the gripper 50 gripping the object 8. The force detection sensor 52 includes two sensing portions 52a on the respective two fingers 51.

The sensing portions 52a can each detect a force applied to the sensing portion 52a. For example, the sensing portions 52a can detect a contact pressure applied to the force detection sensor 52. The force detection sensor 52 detects the force applied to the two sensing portions 52a to detect the grip force of the two fingers 51 gripping the object 8. The grip force on the object 8 is, for example, a sum of the forces detected by the two sensing portions 52a. In other words, the force detection sensor 52 detects the force applied to the object 8 gripped by the gripper 50. The force detection sensor 52 outputs a detection signal 152 indicating the detected grip force (detection grip force) to the grip controller 100. The detection grip force indicated by the detection signal 152 is expressed as, for example, torque. The detection signal 152 indicates a time sequence of the detection grip force. The force detection sensor 52 may be, for example, a tactile sensor. The force detection sensor 52 may be an electrical resistance sensor, a capacitance sensor, a piezoelectric sensor, or an optical sensor. Note that the grip force on the object 8 may be evaluated using, for example, an average value of the forces detected by the two sensing portions 52a.

Each of the sensing portions 52a individually includes the protector 53 on the sensing portion 52a. Each of the sensing portions 52a detects the force applied to the object 8 with the corresponding protector 53 between the sensing portion 52a and the object 8. The protectors 53 are located, for example, on inner surfaces of the fingers 51. When the two fingers 51 grip the object 8, the two protectors 53 are in contact with the object 8. The two protectors 53 sandwich the object 8. The protectors 53 can protect the sensing portions 52a. The protectors 53 can also absorb an impact when the gripper 50 comes in contact with the object 8. The protectors 53 reduce damage to the object 8 when the object 8 is gripped by the gripper 50. The protectors 53 are, for example, elastic members made of synthetic rubber. The two fingers 51 grip the object 8 with each of the two protectors 53 between the corresponding finger 51 and the object 8. The force detection sensor 52 detects the grip force (or the holding force) on the object 8 with each of the protectors 53 between the force detection sensor 52 and the object 8. A grip force hereafter refers to the grip force of the gripper 50 gripping the object 8. Note that, although each of the protectors 53 is located directly on the sensing portion 52a in the present embodiment, each of the protectors 53 may be located indirectly on the sensing portion 52a with another member between the protector 53 and the sensing portion 52a in a manner to allow detection of the force applied to the object 8.

The drive 54 includes, for example, a motor 56, a gear 57, an encoder 58, and a motor driver 55 that drives the motor 56. The drive 54 drives the two fingers 51 in response to a control signal 111 output from the grip controller 100. Spacing between the two fingers 51 is controlled through the driving of the two fingers 51 in response to the control signal 111. In other words, a positional relationship between the two fingers 51 is controlled through the driving of the two fingers 51 in response to the control signal 111. In still other words, a position of each of the fingers 51 is controlled through the driving of the two fingers 51 in response to the control signal 111.

The motor 56 drives the two fingers 51 with the gear 57 between the motor 56 and the two fingers 51. The motor 56 drives the two fingers 51 to move closer to or away from each other. The motor 56 drives the two fingers 51 to change the spacing between the two fingers 51. The encoder 58 is a rotary encoder that detects a rotational position (also referred to as a motor rotational position) of the motor 56. The encoder 58 outputs a detection signal 158 indicating a detection result of the rotational position of the motor 56 to the grip controller 100. The motor driver 55 drives the motor 56 in response to the control signal 111 output from the grip controller 100. The motor driver 55 controls rotation of the motor 56 in response to the control signal 111. The motor 56 is driven in response to the control signal 111 to control the position of each of the fingers 51.

To cause the robot 3 to transfer the object 8, the control device 2 controls a position of the arm 4 to place the object 8 between the two fingers 51 spaced from each other. The grip controller 100 then controls the drive 54 in response to the control signal 111 to move the two fingers 51 toward each other to grip the object 8. The grip controller 100 appropriately controls the grip force of the two fingers 51 gripping the object 8. With the object 8 gripped with the two fingers 51, the control device 2 controls the position of the arm 4 to transfer the object 8 gripped with the two fingers 51.

After the control device 2 controls the position of the arm 4 to place the object 8 between the two fingers 51, the grip controller 100 controls the gripper 50. The grip controller 100 generates the control signal 111 for controlling the rotational position of the motor 56 in response to the detection signal 152 output from the force detection sensor 52 and in response to the detection signal 158 output from the encoder 58. The grip controller 100 outputs the control signal 111 to the motor driver 55 to control the rotational position of the motor 56. Through the control of the rotational position of the motor 56, the spacing between the two fingers 51 (or the position of each of the fingers 51) is controlled. The grip controller 100 controls the grip force of the gripper 50 gripping the object 8 in response to the detection signal 152 and the detection signal 158. In the robotic system 9, the grip controller 100 and the gripper 50 control the grip force of the gripper 50 gripping the object 8, and implement a force-position control loop for controlling the positions of the two fingers 51. In other words, the grip controller 100 and the gripper 50 are included in a feedback control system for controlling the grip force and the positions of the fingers 51.

The grip controller 100 controls the grip force by controlling the spacing between the two fingers 51. For example, the two fingers 51 with narrower spacing between them can grip the object 8 with a larger grip force. The two fingers 51 with wider spacing between them can grip the object 8 with a smaller grip force.

As illustrated in FIG. 3, the grip controller 100 includes, for example, a position controller 101, an adder 102, a position obtainer 103, a subtractor 104, a converter 105, a filter 106, and a correction filter 107 as functional blocks. Note that the functions of the position controller 101 may be implemented entirely or partially by a hardware circuit, without using software to implement the functions. The adder 102, the position obtainer 103, the subtractor 104, the converter 105, the filter 106, and the correction filter 107 also have the same or a similar structure.

The correction filter 107 is, for example, a digital filter. The correction filter 107 performs filtering on the detection signal 152 output from the force detection sensor 52 to correct the detection signal 152. The correction filter 107 then outputs, as a filtered signal 117, the detection signal 152 that has undergone the filtering, or in other words, the detection signal 152 after correction. An operation of the correction filter 107 will be described in detail later.

The subtractor 104 subtracts the detection grip force indicated by the filtered signal 117 from a target grip force. The subtractor 104 then outputs a grip force deviation signal 114 indicating a time sequence of grip force deviation obtained by subtracting the detection grip force indicated by the filtered signal 117 from the target grip force. The target grip force is a target value for the grip force of the gripper 50 gripping the object 8. The target value is also referred to as a command value or a reference value. When the grip force deviation is positive, the detection grip force is smaller than the target grip force. When the grip force deviation is negative, the detection grip force is larger than the target grip force. The target grip force may be a target value for a force applied to the object 8 when the object 8 is gripped. Each of the target grip force and the grip force deviation is expressed as, for example, torque.

The converter 105 converts the grip force deviation indicated by the grip force deviation signal 114 to an amount of rotational position change. The amount of rotational position change refers to an amount of change in the motor rotational position to cause a change in the grip force by the corresponding grip force deviation. The converter 105 outputs a rotational position change signal 115 indicating a time series of the amount of rotational position change. The grip force of the gripper 50 gripping the object 8 is controlled based on the amount of rotational position change.

The filter 106 performs filtering on the rotational position change signal 115. The filter 106 performs, for example, low-pass filtering on the rotational position change signal 115. Thus, the rotational position change signal 115 undergoes noise reduction. The filter 106 then outputs the rotational position change signal 115 after the filtering as a filtered signal 116. The filter 106 may include, for example, an integrator.

The adder 102 adds, to a target rotational position, the amount of rotational position change indicated by the filtered signal 116 and determines a resultant value to be a correction target rotational position. The target rotational position is a target value for the motor rotational position for the two fingers 51 to grip the object 8. The adder 102 outputs a correction target rotational position signal 112 indicating a time series of the correction target rotational position.

The position obtainer 103 determines the motor rotational position in response to the detection signal 158 output from the encoder 58. The position obtainer 103 then outputs a rotational position signal 113 indicating a time series of the determined motor rotational position (also referred to as a detection motor rotational position).

The position controller 101 subtracts the detection motor rotational position indicated by the rotational position signal 113 from the correction target rotational position indicated by the correction target rotational position signal 112. The position controller 101 then generates the control signal 111 for changing the motor rotational position by a rotational position deviation resulting from subtracting the detection motor rotational position from the correction target rotational position, and outputs the control signal 111 to the motor driver 55. The motor driver 55 drives the motor 56 in response to the control signal 111 to cause the motor rotational position to approach the correction target rotational position. The grip force is thus controlled to approach the target grip force.

As described above, the protectors 53 are located on the sensing portions 52a in the force detection sensor 52. With the protectors 53 being elastic members with a viscoelastic characteristic, the sensing portions 52a may have lower responsivity. The detection signal 152 from the force detection sensor 52 may thus indicate a detection grip force that is different from an actual grip force. Note that the responsivity of the sensing portions 52a is mainly affected by the viscoelastic characteristic of the protectors 53, although the responsivity of the sensing portions 52a is actually also affected by their viscoelastic characteristic. Thus, a response lag of the sensing portions 52a substantially depends on the viscoelastic characteristic of the protectors 53.

FIG. 5 is a graph showing an example temporal change in the detection grip force and an example temporal change in the actual grip force (or the force actually applied to the object 8 being gripped). A dashed line 120 indicates an example temporal change in the actual grip force. A solid line 121 indicates an example temporal change in the detection grip force. FIG. 5 and FIG. 6 (described later) show simulation results. A comparison between the dashed line 120 and the solid line 121 indicates that the protectors 53 with the viscoelastic characteristic causes the force detection sensor 52 to have a lag in detecting the grip force and that the detection holding force differs from the actual holding force for some time after the object 8 starts being held.

The grip controller 100 controls the grip force of the gripper 50 based on the viscoelastic characteristic of the protectors 53. In other words, the holder controller 100 controls the holding force of the holder 50 based on the viscoelastic characteristic of the protectors 53. This allows the holder 50 to hold the object 8 more stably. For example, the grip controller 100 corrects the detection signal 152 from the force detection sensor 52 by filtering with the correction filter 107 to cause the detection grip force indicated by the detection signal 152 to approach the actual grip force. This allows appropriate control of the grip force of the gripper 50 gripping the object 8 in response to the detection signal 152 after the filtering (or the filtered signal 117).

FIG. 6 is a graph showing an example temporal change in the detection grip force indicated by the filtered signal 117 and an example temporal change in the actual grip force. A dashed line 120 indicates an example temporal change in the actual grip force. A solid line 125 indicates an example temporal change in the detection grip force indicated by the filtered signal 117. A comparison between the dashed line 120 and the solid line 125 indicates that the detection holding force indicated by the filtered signal 117 is closer to the actual holding force with an effect of the correction filter 107. An example operation of the correction filter 107 will now be described in detail. A viscoelastic characteristic hereafter refers to the viscoelastic characteristic of the protectors 53.

The correction filter 107 performs first filtering on the detection signal 152 to reduce an effect of the viscoelastic characteristic of the protectors 53 on the detection signal 152. The correction filter 107 also performs second filtering on the detection signal 152 to reduce an effect of the first filtering in a frequency bandwidth higher than or equal to a control bandwidth of the grip controller 100. The correction filter 107 then performs noise reduction on the detection signal 152 in the frequency bandwidth higher than or equal to the control bandwidth of the grip controller 100. The correction filter 107 outputs the detection signal 152 that has undergone the first filtering, the second filtering, and the noise reduction to the subtractor 104 as the filtered signal 117. The noise reduction performed by the correction filter 107 may be hereafter referred to as first noise reduction, and noise reduction performed by the filter 106 may be hereafter referred to as second noise reduction.

Example of First Filtering

The viscoelastic characteristic of the protectors 53 is expressed by, for example, a Voigt model including a spring and a dashpot connected in parallel. The Voigt model is a first-order lag model. The viscoelastic characteristic is, for example, a first-order lag characteristic. In this case, a transfer function G0(s) of the viscoelastic characteristic is, for example, a transfer function with a first-order lag system including one pole. The transfer function G0(s) is expressed by, for example, Formula 1 below.

$$G0(s) = \frac{K}{1 + T0 \cdot s} \qquad (1)$$

In Formula 1, T0 is a time constant, and K is a gain. The frequency of a pole of the viscoelastic characteristic, or in other words, the frequency of the pole of the transfer function G0(s), is expressed by 1/T0. The frequency of the pole is hereafter also referred to as a pole frequency. The frequency may be an angular frequency or may be expressed in Hz.

When the viscoelastic characteristic is the first-order lag characteristic, a characteristic of the first filtering (also referred to as a first filter characteristic) is, for example, a lead filter characteristic with a first-order lead system to reduce the effect of the viscoelastic characteristic of the protectors 53 on the detection signal 152. A transfer function G1(s) of the first filter characteristic as a first-order lead characteristic is expressed by, for example, Formula 2 below.

$$G1(s) = \frac{1 + T1 \cdot s}{K} \qquad (2)$$

In Formula 2, T1 is a time constant, and K is a gain. The pole frequency of the first filter characteristic, or in other words, the pole frequency of the transfer function G1(s), is expressed by 1/T1. The pole frequency of the first filter characteristic is set to, for example, a value that is the same as or close to the pole frequency of the viscoelastic characteristic. The first filter characteristic is thus substantially opposite to the viscoelastic characteristic. The detection signal 152 after the first filtering is thus less affected by the viscoelastic characteristic of the protectors 53. This allows the detection grip force indicated by the detection signal 152 to approach the actual grip force. The pole frequency of the first filter characteristic may be set to, for example, 0.8 to 1.2 times inclusive the pole frequency of the viscoelastic characteristic, or may be set to 0.9 to 1.1 times inclusive the pole frequency of the viscoelastic characteristic.

In this manner, the correction filter 107 performs the first filtering on the detection signal 152 to reduce the effect of the viscoelastic characteristic on the detection signal 152, and thus allows the detection grip force indicated by the detection signal 152 after the first filtering to approach the actual grip force. The grip force of the gripper 50 gripping the object 8 can thus be appropriately controlled based on the detection grip force. This allows the gripper 50 to hold the object 8 more stably.

The pole frequency of the first filter characteristic may be prestored in the storage 11. The grip controller 100 may determine the pole frequency of the first filter characteristic based on the transfer function G0(s) of the viscoelastic characteristic in the storage 11. In this case, the grip controller 100 determines the pole frequency of the viscoelastic characteristic based on the transfer function G0(s) of the viscoelastic characteristic in the storage 11. The grip controller 100 then determines the pole frequency of the first filter characteristic based on the determined pole frequency of the viscoelastic characteristic.

Example of Second Filtering

The first filtering on the detection signal 152 does not largely contribute to grip force control performed by the grip controller 100 in the frequency bandwidth higher than or equal to the control bandwidth of the grip controller 100.

However, the effect of the first filtering on the detection signal 152 in the frequency bandwidth higher than or equal to the control bandwidth may negatively affect the grip force control performed by the grip controller 100. For example, in a gain plot of the first-order lead system, a higher frequency has a higher gain when the frequency is higher than the pole frequency. Thus, the first filtering with the first-order lead system characteristic easily amplifies noise in a higher frequency bandwidth. The first filtering on the detection signal 152 is thus likely to cause noise amplification in the frequency bandwidth higher than or equal to the control bandwidth, possibly negatively affecting the grip force control.

To reduce the effect of the first filtering on the detection signal 152 in the frequency bandwidth higher than or equal to the control bandwidth, a characteristic of the second filtering (also referred to as a second filter characteristic) is, for example, a lag filter characteristic with the first-order lag system. The second filter characteristic may be a low-pass filter characteristic. A transfer function G2(s) of the second filter characteristic as the first-order lag characteristic is expressed by, for example, Formula 3 below.

$$G2(s) = \frac{K}{1 + T2 \cdot s} \tag{3}$$

In Formula 3, T2 is a time constant, and K is a gain. The pole frequency of the second filter characteristic, or in other words, the pole frequency of the transfer function G2(s), is expressed by 1/T2. The pole frequency (also referred to as a cutoff frequency) of the second filter characteristic is set to, for example, higher than the pole frequency of the first filter characteristic and higher than or equal to an upper limit value of the control bandwidth of the grip controller 100. This reduces the effect of the first filtering on the detection signal 152 in the frequency bandwidth higher than or equal to the control bandwidth of the grip controller 100 (specifically, in a frequency bandwidth higher than or equal to the pole frequency of the second filter characteristic).

The upper limit value of the control bandwidth of the grip controller 100 is higher than the pole frequency of the viscoelastic characteristic. The pole frequency of the first filter characteristic is set to a value lower than the upper limit value of the control bandwidth of the grip controller 100. The pole frequency of the second filter characteristic may be set to 1 to 20 times inclusive the upper limit value of the control bandwidth of the grip controller 100, or may be set to 10 to 20 times inclusive the upper limit value.

The control bandwidth of the grip controller 100 is a bandwidth ranging to a zero-point frequency (also referred to as a zero-crossing frequency) at which the gain is 0 dB in a gain plot of a loop transfer function of a force-position control loop (also referred to as a first force-position control loop) for the grip controller 100 including no correction filter 107. The upper limit value of the control bandwidth of the grip controller 100 is the zero-point frequency in the gain plot of the loop transfer function of the first force-position control loop. In the example in FIG. 3, the loop transfer function of the first force-position control loop is a transfer function from an input of the converter 105 to an output of the force detection sensor 52.

FIG. 7 is an example Bode plot of the loop transfer function. FIG. 7 includes a gain plot at a top and a phase plot at a bottom. Each of the Bode plots (described later) also includes a gain plot at a top and a phase plot at a bottom.

In FIG. 7, solid lines indicate the Bode plot of the loop transfer function of the first force-position control loop. FIG. 7 shows a zero-point frequency $\omega 0$ in the gain plot of the loop transfer function of the first force-position control loop, or in other words, shows an upper limit value $\omega 0$ of the control bandwidth of the grip controller 100. In the example in FIG. 7, the upper limit value $\omega 0$ of the control bandwidth is about 20 rad/s.

In FIG. 7, dashed lines indicate the Bode plot of the loop transfer function of a force-position control loop (also referred to as a second force-position control loop) for the grip controller 100 that does not perform the second filtering or the third filtering. The loop transfer function of the second force-position control loop is a transfer function from the input of the converter 105 to an output of the correction filter 107 that performs the first filtering alone. In FIG. 7, dot-and-dash lines indicate the Bode plot of the loop transfer function of a force-position control loop (also referred to as a third force-position control loop) for the grip controller 100 that does not perform the third filtering. The loop transfer function of the third force-position control loop is a transfer function from the input of the converter 105 to the output of the correction filter 107 that performs the first filtering and the second filtering alone. FIG. 7 and subsequent figures (described later) each show the Bode plot for K = 1.

Note that the first filtering and the second filtering may be defined as a single filtering process. In this case, for example, the first filtering and the second filtering may be defined as a single filtering process having a lead-lag filter characteristic, with the first filter characteristic being a lead filter characteristic and the second filter characteristic being a lag filter characteristic as described above.

The first filtering and the second filtering may be hereafter collectively referred to as integrated filtering. A transfer function G12(s) of a characteristic of the integrated filtering (also referred to as an integrated filter characteristic) is obtained by multiplying the transfer function G1(s) of the first filter characteristic and the transfer function G2(s) of the second filter characteristic together. The transfer function G12(s) is expressed by, for example, Formula 4 below.

$$G12(s) = G1(s) \times G2(s) = \frac{1 + T1 \cdot s}{1 + T2 \cdot s} \quad (4)$$

FIG. 8 includes an example Bode plot of the transfer function G12(s) of the integrated filter characteristic and an example Bode plot of the transfer function G0(s) of the viscoelastic characteristic. In FIG. 8, solid lines indicate the Bode plot of the transfer function G12(s), and dashed lines indicate the Bode plot of the transfer function G0(s). FIG. 8 shows an example of the upper limit value ω0 of the control bandwidth, an example of a pole frequency a of the first filter characteristic (specifically, 1/T1), and an example of a pole frequency b of the second filter characteristic (specifically, 1/T2). In the example in FIG. 8, the pole frequency b of the second filter characteristic is set to about 30 times the upper limit value ω0 of the control bandwidth.

FIG. 9 is an example Bode plot of a transfer function obtained by multiplying the transfer function G12(s) and the transfer function G0(s) together. The Bode plot shown in FIG. 9 may be a Bode plot of the transfer function from an input of the protectors 53 to the output of the correction filter 107 that performs the integrated filtering alone in the example in FIG. 3 with a transfer function of the force detection sensor 52 being 1. A comparison between the Bode plot in FIG. 9 and the dashed line Bode plot in FIG. 8 indicates that the detection signal 152 that has undergone the integrated filtering is less affected by the viscoelastic characteristic (e.g., less affected by the first-order lag characteristic) in a frequency bandwidth lower than the pole frequency b of the second filter characteristic. The detection signal 152 that has undergone the integrated filtering is less affected by the first filtering (e.g., less affected by the first-order lead characteristic) and has less noise amplification in a frequency bandwidth higher than or equal to the pole frequency b.

In this manner, the correction filter 107 performs second filtering on the detection signal 152 to reduce the effect of the first filtering in the frequency bandwidth higher than or equal to the control bandwidth of the grip controller 100. This reduces the likelihood that the effect of the first filtering on the detection signal 152 in the frequency bandwidth higher than or equal to the control bandwidth negatively affects the grip force control performed by the grip controller 100. When the first filter characteristic is the first-order lead characteristic, for example, this process can reduce amplification of noise generated through the first filtering in the frequency bandwidth higher than or equal to the control bandwidth, and can reduce the likelihood that such noise negatively affects the grip force control.

The pole frequency of the second filtering may be prestored in the storage 11. The grip controller 100 may determine the pole frequency of the second filter characteristic based on the loop transfer function of the first force-position control loop stored in the storage 11. In this case, the grip controller 100 calculates the zero-point frequency of the loop transfer function in the storage 11. The grip controller 100 then determines the pole frequency of the second filter characteristic based on the calculated zero-point frequency, or in other words, based on the upper limit value of the control bandwidth.

Example of First Noise Reduction

The first noise reduction is, for example, low-pass filtering. A characteristic of the first noise reduction (also referred to as a first noise reduction characteristic) is, for example, the first-order lag characteristic. A transfer function G3(s) of the first noise reduction characteristic is expressed by, for example, first-order Formula 5 below.

$$G3(s) = \frac{K}{1 + T3 \cdot s} \quad (5)$$

In Formula 5, T3 is a time constant, and K is a gain. A pole frequency c of the first noise reduction characteristic, or in other words, a pole frequency c of the transfer function G3(s), is expressed by 1/T3. A pole frequency c (also referred to as a cutoff frequency) of the first noise reduction characteristic is set to, for example, a value higher than the pole frequency b of the second filter characteristic. The pole frequency c may be higher than the pole frequency b and lower than or equal to 20 times the pole frequency b, or may be 2 to 10 times inclusive the pole frequency b. The first noise reduction may be second- or higher-order filtering.

FIG. 10 is an example Bode plot of a transfer function of the correction filter 107 that performs the first filtering, the second filtering, and the first noise reduction. FIG. 10 shows examples of the upper limit value ω0 of the control bandwidth, the pole frequency a, the pole frequency b, and the pole frequency c. In the example in FIG. 10, the pole frequency c is set to about 700 times the pole frequency b.

In this manner, the correction filter 107 performs the first noise reduction on the detection signal 152 in the frequency bandwidth higher than or equal to the control bandwidth of the grip controller 100. Thus, the grip controller 100 can appropriately control the grip force of the gripper 50 gripping the object 8 in response to the detection signal 152 after the first noise reduction.

The pole frequency of the first noise reduction characteristic may be prestored in the storage 11. The grip controller 100 may determine the pole frequency c of the first noise reduction characteristic based on the loop transfer function of the first force-position control loop stored in the storage 11. In this case, the grip controller 100 calculates the zero-point frequency of the loop transfer function in the storage 11. The grip controller 100 then determines the pole frequency c of the first noise reduction characteristic based on the calculated zero-point frequency, or in other words, based on the upper limit value of the control bandwidth.

The first filtering, the second filtering, and the first noise reduction may be performed in any order. For example, the second filtering may be performed on the detection signal 152 after the first filtering, or the first filtering may be performed on the detection signal 152 after the second filtering. The first noise reduction may be performed on the detection signal 152 after the second filtering, or the second filtering may be performed on the detection signal 152 after the first noise reduction. The first noise reduction may be performed on the detection signal 152 after the first filtering, or the first filtering may be performed on the detection signal 152 after the first noise reduction. When the first filtering is performed after the second filtering, the preceding second filtering reduces the effect of the first filtering. The detection signal 152 that has undergone the second filtering and the first filtering is thus less affected by the first filtering in the frequency bandwidth higher than or equal to the control bandwidth.

At least two selected from the group consisting of the first filtering, the second filtering, and the first noise reduction may be performed simultaneously. For example, the correction filter 107 may include a single filter having the same transfer function as the transfer function G12(s) of the integrated filter described above. In this case, the detection signal 152 is filtered with the single filter to simultaneously perform the first filtering and the second filtering. The detection signal 152 may be filtered with a single filter having a transfer function obtained by multiplying the transfer function G1(s) and the transfer function G3(s) together. In this case, the first filtering and the first noise reduction are performed simultaneously. The detection signal 152 may be filtered with a single filter having a transfer function obtained by multiplying the transfer function G2(s) and the transfer function G3(s) together. In this case, the second filtering and the first noise reduction are performed simultaneously. The detection signal 152 may be filtered with a single filter having a transfer function obtained by multiplying the transfer function G1(s), the transfer function G2(s), and the transfer function G3(s) together. In this case, the first filtering, the second filtering, and the first noise reduction are performed simultaneously.

Although the first filter characteristic is the first-order lead characteristic in the above examples, the first filter characteristic may be any other characteristic. The first filter characteristic may be any characteristic based on the viscoelastic characteristic to reduce the effect of the viscoelastic characteristic of the protectors 53 on the detection signal 152. For example, when the viscoelastic characteristic is a second-order lag characteristic, the first filter characteristic may be a second-order lead characteristic.

Although the second filter characteristic is the first-order lag characteristic in the above examples, the second filter characteristic may be any other characteristic. The second filter characteristic may be any characteristic based on the first filter characteristic to reduce the effect of the first filtering in the frequency bandwidth higher than or equal to the control bandwidth. For example, when the first filter characteristic is the second-order lead characteristic, the second filter characteristic may be the second-order lag characteristic.

For example, the viscoelastic characteristic may be the second-order lag characteristic, the first filter characteristic may be a second-order lead filter characteristic with a second-order lead system, and the second filter characteristic may be a second-order lag filter characteristic with a second-order lag system. FIG. 11 is an example Bode plot of the transfer function G12(s) of the integrated filter characteristic in this case. The transfer function G12(s) of the integrated filter characteristic may be a transfer function of a second-order lead-lag filter characteristic. In FIG. 11, dashed lines indicate the Bode plot of the transfer function G12(s). In FIG. 11, solid lines indicate the Bode plot corresponding to the solid lines in FIG. 8 (specifically, the Bode plot of the transfer function of a first-order lead-lag filter characteristic). FIG. 11 shows examples of two pole frequencies a1 and a2 of a second-order first filter characteristic, examples of two pole frequencies b1 and b2 of a second-order second filter characteristic, and an example of the upper limit value ω0 of the control bandwidth of the grip controller 100. A second-order viscoelastic characteristic has two pole frequencies that are each, for example, lower than the upper limit value ω0 of the control bandwidth.

The pole frequency a1 is set to, for example, a value that is the same as or close to the lower one of the two pole frequencies of the viscoelastic characteristic. The pole frequency a2 is set to, for example, a value that is the same as or close to the higher one of the two pole frequencies of the viscoelastic characteristic. The two pole frequencies b1 and b2 are set to, for example, the same value. The two pole frequencies b1 and b2 are set to, for example, higher than or equal to the upper limit value ω0 of the control bandwidth of the grip controller 100 in the same manner as or in a similar manner to the pole frequency b of the first-order second filter characteristic. Note that, although the viscoelastic characteristic is a second order, the first filter characteristic and the second filter characteristic may be a first order.

Adjustment of First Filter Characteristic

First Example of Adjustment

The viscoelastic characteristic of the protectors 53 can change with environment. For example, the viscoelastic characteristic of the protectors 53 changes with temperature of the protectors 53. The first filter characteristic may thus be adjusted based on a detection result of the temperature of the protectors 53. FIG. 12 is a partial block diagram of the robotic system 9, illustrating its example structure in this case.

In the example in FIG. 12, the grip controller 100 includes an adjuster 108 that adjusts the first filter characteristic. The gripper 50 includes a temperature sensor 59 that detects the temperature of the protectors 53. The adjuster 108 adjusts the first filter characteristic based on a detection result from the temperature sensor 59. For example, the adjuster 108 adjusts the first filter characteristic by adjusting the pole frequency of the first filter characteristic. The functions of the adjuster 108 may be implemented entirely or partially by a hardware circuit, without using software to implement the functions.

The temperature sensor 59 may be located, for example, in one of the two sensing portions 52a in the force detection sensor 52 or located in one of the two protectors 53. The temperature sensor 59 may include, for example, a semiconductor temperature sensor such as a thermistor, or may include another member. For example, the temperature sensor 59 repeatedly detects the temperature of the protectors 53 and outputs detection results to the adjuster 108.

In the example in FIG. 12, the nonvolatile memory included in the storage 11 in the control device 1 stores relational information 11b indicating a relationship between the temperature of the protectors 53 and the pole frequency of the viscoelastic characteristic. The relational information 11b may be in a form of a table indicating the relationship between the temperature and the pole frequency of the viscoelastic characteristic, or may be a relational expression indicating the relationship between the temperature and the pole frequency of the viscoelastic characteristic. The relational information 11b may indicate changes in the viscoelastic characteristic based on the temperature of the protectors 53.

The adjuster 108 receiving the detection result from the temperature sensor 59 identifies the temperature of the protectors 53 based on the detection result. The adjuster 108 then obtains, from the relational information 11b in the storage 11, the pole frequency of the viscoelastic characteristic corresponding to the identified temperature. The adjuster 108 then adjusts the pole frequency of the first filter characteristic based on the obtained pole frequency of the viscoelastic characteristic. For example, the adjuster 108 sets the pole frequency a of the first filter characteristic to a value that is the same as or close to the obtained pole frequency of the viscoelastic characteristic. The first filter characteristic is thus adjusted based on the detection result of the temperature of the protectors 53. For example, the adjuster 108 repeatedly adjusts the first filter characteristic.

In this manner, the holder controller 100 may control the holding force of the holder 50 based on an environmental change in the viscoelastic characteristic of the protectors 53. This allows the holder 50 to hold the object 8 more stably.

The first filter characteristic may be adjusted based on the detection result of the temperature of the protectors 53. This can appropriately reduce the effect of the viscoelastic characteristic on the detection signal 152. The grip force of the gripper 50 gripping the object 8 can thus be appropriately controlled.

Second Example of Adjustment

The viscoelastic characteristic of the protectors 53 changes with a change over time in the protectors 53. In other words, the viscoelastic characteristic changes over time. The adjuster 108 may adjust the first filter characteristic based on first indicator information that is an indicator of the change over time in the viscoelastic characteristic. FIG. 13 is a partial block diagram of the robotic system 9, illustrating its example structure in this case.

The nonvolatile memory included in the storage 11 stores first indicator information 11c. The first indicator information 11c indicates, for example, a time elapsed from a reference timing (or also simply referred to as an elapsed time). The reference timing may be a timing at which the robot hand 5 including the protectors 53 is shipped, or may be a timing at which the robot hand 5 is first installed in a work environment. The reference timing may be a timing at which the robot hand 5 first operates, or may be a timing at which the protectors 53 are attached to the gripper 50. A longer elapsed time causes a greater change over time in the viscoelastic characteristic. The elapsed time may thus be an indicator of the change over time in the viscoelastic characteristic. The controller 10 updates the first indicator information 11c in the storage 11 in response to, for example, an output signal from a timer included in the control device 1.

The nonvolatile memory in the storage 11 stores relational information 11d indicating a relationship between the first indicator information 11c (e.g., the elapsed time) and the pole frequency of the viscoelastic characteristic. The relational information 11d may be in a form of a table indicating the relationship between the first indicator information 11c and the pole frequency of the viscoelastic characteristic, or may be a relational expression indicating the relationship between the first indicator information 11c and the pole frequency of the viscoelastic characteristic. When the first indicator information 11c indicates the elapsed time, the relational information 11d may indicate changes in the viscoelastic characteristic based on the elapsed time.

To adjust the first filter characteristic, the adjuster 108 first reads the first indicator information 11c from the storage 11. The adjuster 108 then obtains, from the relational information 11d in the storage 11, the pole frequency of the viscoelastic characteristic corresponding to the read first indicator information 11c. The adjuster 108 then adjusts the pole frequency of the first filter characteristic based on the obtained pole frequency of the viscoelastic characteristic, in the same manner as or in a similar manner to the first example of adjustment described above. For example, the adjuster 108 repeatedly adjusts the first filter characteristic.

In this manner, the holder controller 100 may control the holding force of the holder 50 based on the change over time in the viscoelastic characteristic of the protectors 53. This allows the holder 50 to hold the object 8 more stably.

The first filter characteristic may be adjusted based on the first indicator information 11c that is the indicator of the change over time in the viscoelastic characteristic. This can appropriately reduce the effect of the viscoelastic characteristic on the detection signal 152. The grip force of the gripper 50 gripping the object 8 can thus be appropriately controlled.

Third Example of Adjustment

The viscoelastic characteristic of the protectors 53 changes with use of the protectors 53. The adjuster 108 may adjust the first filter characteristic based on second indicator information that is an indicator of the change in the viscoelastic characteristic of the protectors 53 with use. FIG. 14 is a partial block diagram of the robotic system 9, illustrating its example structure in this case.

The nonvolatile memory included in the storage 11 stores second indicator information 11e. The second indicator information 11e indicates, for example, a total operating time of the robot hand 5. A longer total operating time causes a greater change in the viscoelastic characteristic of the protectors 53 with use. The total operating time may thus be an indicator of the change in the viscoelastic characteristic of the protectors 53 with use. The controller 10 updates the second indicator information 11e in the storage 11 in response to, for example, an output signal from the timer included in the control device 1.

The nonvolatile memory in the storage 11 stores relational information 11f indicating a relationship between the second indicator information 11e (e.g., the total operating time) and the pole frequency of the viscoelastic characteristic. The relational information 11f may be in a form of a table indicating the relationship between the second indicator information 11e and the pole frequency of the viscoelastic characteristic, or may be a relational expression indicating the relationship between the second indicator information 11e and the pole frequency of the viscoelastic characteristic. When the second indicator information 11e indicates the total operating time, the relational information 11f may indicate changes in the viscoelastic characteristic based on the total operating time.

To adjust the first filter characteristic, the adjuster 108 first reads the second indicator information 11e from the storage 11. The adjuster 108 then obtains, from the relational information 11f in the storage 11, the pole frequency of the viscoelastic characteristic corresponding to the read second indicator information 11e. The adjuster 108 then adjusts the pole frequency of the first filter characteristic based on the obtained pole frequency of the viscoelastic characteristic, in the same manner as or in a similar manner to the first example of adjustment described above. For example, the adjuster 108 repeatedly adjusts the first filter characteristic.

In this manner, the holder controller 100 may control the holding force of the holder 50 based on the change in the viscoelastic characteristic of the protectors 53 with use. This allows the holder 50 to hold the object 8 more stably.

The first filter characteristic may be adjusted based on the second indicator information 11e that is the indicator of the change in the viscoelastic characteristic of the protectors 53 with use. This can appropriately reduce the effect of the viscoelastic characteristic on the detection signal 152. The grip force of the gripper 50 gripping the object 8 can thus be appropriately controlled.

Note that the second indicator information 11e is not limited to the total operating time. For example, the second indicator information 11e may indicate a total count of grips with the gripper 50 or a total gripping time with the gripper 50.

The holder controller 100 may control the holding force of the holder 50 based on at least two selected from the group consisting of the environmental change in the viscoelastic characteristic of the protectors 53, the change over time in the viscoelastic characteristic of the protectors 53, and the change in the viscoelastic characteristic of the protectors 53 with use. For example, the adjuster 108 may adjust the first filter characteristic based on at least two selected from the group consisting of the detection result of the temperature of the protectors 53, the first indicator information 11c, and the second indicator information 11e. FIG. 15 is a partial block diagram of the robotic system 9 illustrating its example structure, in which the adjuster 108 adjusts the first filter characteristic based on the detection result of the temperature of the protectors 53, the first indicator information 11c, and the second indicator information 11e. In the example in FIG. 15, the nonvolatile memory in the storage 11 stores relational information 11g indicating a relationship between the temperature of the protectors 53, the first indicator information 11c, the second indicator information 11e, and the pole frequency of the viscoelastic characteristic. The adjuster 108 identifies the temperature of the protectors 53 based on the detection result from the temperature sensor 59. The adjuster 108 also reads the first indicator information 11c and the second indicator information 11e from the storage 11. The adjuster 108 then obtains, from the relational information 11g in the storage 11, the pole frequency of the viscoelastic characteristic corresponding to the temperature of the protectors 53, the first indicator information 11c, and the second indicator information 11e. The adjuster 108 then adjusts the pole frequency of the first filter characteristic based on the obtained pole frequency of the viscoelastic characteristic.

To allow the adjuster 108 to adjust the first filter characteristic based on the detection result of the temperature of the protectors 53 and the first indicator information 11c, the storage 11 stores relational information indicating a relationship between the temperature of the protectors 53, the first indicator information 11c, and the pole frequency of the viscoelastic characteristic. The adjuster 108 can thus obtain the pole frequency of the viscoelastic characteristic corresponding to the identified temperature of the protectors 53 and corresponding to the first indicator information 11c in the storage 11. To allow the adjuster 108 to adjust the first filter characteristic based on the detection result of the temperature of the protectors 53 and the second indicator information 11e, the storage 11 stores relational information indicating a relationship between the temperature of the protectors 53, the second indicator information 11e, and the pole frequency of the viscoelastic characteristic. The adjuster 108 can thus obtain the pole frequency of the viscoelastic characteristic corresponding to the identified temperature of the protectors 53 and corresponding to the second indicator information 11e in the storage 11. To allow the adjuster 108 to adjust the first filter characteristic based on the first indicator information 11c and the second indicator information 11e, the storage 11 stores relational information indicating a relationship between the first indicator information 11c, the second indicator information 11e, and the pole frequency of the viscoelastic characteristic. The adjuster 108 can thus obtain the pole frequency of the viscoelastic characteristic corresponding to the first indicator information 11c and the second indicator information 11e in the storage 11.

Fourth Example of Adjustment

A reference object 8 may be prepared for adjusting the first filter characteristic. The robotic system 9 may have, as an operation mode, a calibration mode in which the adjuster 108 adjusts the first filter characteristic in response to the detection signal 152 from the force detection sensor 52 in the gripper 50 gripping the reference object 8. An example operation of the robotic system 9 in this case will now be described.

For example, before shipment of the robot hand 5, the detection signal 152 from the force detection sensor 52 in the gripper 50 gripping the reference object 8 is stored into the storage 11 as a reference detection signal 152. After the robot hand 5 is installed in the work environment and starts to be used, the first filter characteristic is adjusted using the reference detection signal 152 in the storage 11.

For example, a user inputs an instruction into the control device 2 as a robot controller to cause the robotic system 9 to operate in the calibration mode. In response to the instruction, the control device 2 controls the position of the arm 4 to place the reference object 8 between the two fingers 51 in the gripper 50. The gripper 50 moves the two fingers 51 toward each other to grip the reference object 8 under control of the grip controller 100. The force detection sensor 52 in the gripper 50 gripping the reference object 8 provides the detection signal 152 to the adjuster 108. The adjuster 108 compares the detection signal 152 with the reference detection signal 152 in the storage 11, and uses the comparison result to estimate the current pole frequency of the viscoelastic characteristic of the protectors 53. The adjuster 108 then adjusts the first filter characteristic based on the estimated pole frequency of the viscoelastic characteristic. For example, the adjuster 108 sets the pole frequency a of the first filter characteristic to a value that is the same as or close to the estimated pole frequency of the viscoelastic characteristic. Upon adjustment of the first filter characteristic, the calibration mode ends. The gripper 50 then releases the reference object 8. After this process, the robotic system 9 operates normally.

The robot hand 5 may include a force sensor in its wrist. The force sensor can detect, for example, a force applied to a portion of the robot hand 5 that is closer to the tip than the wrist. The robot hand 5 may include elastic members with a viscoelastic characteristic, such as the protectors 53, that are closer to the tip than the force sensor. In this case, the force sensor detects the force with the elastic members having the viscoelastic characteristic. In this case, the correction filter 107 may perform filtering on a detection signal output from the force sensor in the same manner as or in a similar manner to the above. This allows a force indicated by the detection signal output from the force sensor to approach a force actually applied to the robot hand 5. When the fingers 51 include elastic members, for example, the force sensor detects the force with the elastic members having the viscoelastic characteristic. The force sensor may be an electrical resistance sensor, a capacitance sensor, a piezoelectric sensor, or an optical sensor.

Although the correction filter 107 performs the first filtering, the second filtering, and the first noise reduction in the above examples, the correction filter 107 may not perform one of the second filtering or the first noise reduction.

The second filtering may be performed on a signal based on the detection signal 152, rather than on the detection signal 152. In this case, the second filtering reduces the effect of the first filtering on the signal based on the detection signal 152 in the frequency bandwidth higher than or equal to the control bandwidth. For example, the filter 106 may perform the second filtering on the rotational position change signal 115 based on the detection signal 152. In this case, the functions of the filter 106 are partially included in the correction filter 107. The second filtering may be performed on the grip force deviation signal 114 based on the detection signal 152. In this case, the grip force deviation signal 114 after the second filtering is input into the converter 105. The second filtering may be performed on the filtered signal 116 based on the detection signal 152, or may be performed on the correction target rotational position signal 112 based on the detection signal 152.

The first noise reduction may be performed on a signal based on the detection signal 152, rather than on the detection signal 152. In this case, the first noise reduction removes noise from the signal based on the detection signal 152 in the frequency bandwidth higher than or equal to the control bandwidth. For example, the filter 106 may perform the first noise reduction on the rotational position change signal 115. In this case, the functions of the filter 106 are partially included in the correction filter 107. The filter 106 may perform the first noise reduction instead of the second noise reduction. The first noise reduction may be performed on the grip force deviation signal 114, the filtered signal 116, or the correction target rotational position signal 112.

FIG. 16 is a partial block diagram of the robotic system 9 illustrating its example structure, in which the filter 106 performs the second filtering and the first noise reduction on the rotational position change signal 115. In the example in FIG. 16, the correction filter 107 includes the functions of the filter 106 for performing the second filtering and the first noise reduction, and includes a filter 109 that performs the first filtering on the detection signal 152. The detection signal 152 that has undergone the first filtering with the filter 109 is input into the subtractor 104 as the filtered signal 117.

Although the target rotational position is input into the adder 102 in the above examples, a target value (also referred to as a target finger position) for the position of each of the two fingers 51 gripping the object 8 may be input into the adder 102. In this case, the converter 105 converts the grip force deviation indicated by the grip force deviation signal 114 to an amount of finger position change. The amount of finger position change refers to an amount of change in the position of each of the fingers 51 to cause a change in the grip force by the corresponding grip force deviation. The converter 105 outputs a finger position change signal indicating a time series of the amount of finger position change.

The filter 106 performs filtering on the finger position change signal. The finger position change signal after the filtering is input into the adder 102 as the filtered signal 116. The adder 102 adds, to a target finger position, the amount of finger position change indicated by the filtered signal 116 and determines a resultant value to be a correction target finger position. The adder 102 outputs a correction target finger position signal indicating a time series of the correction target finger position.

The position obtainer 103 determines the position of each of the fingers 51 in response to the detection signal 158 output from the encoder 58. The position obtainer 103 then outputs a detection finger position signal indicating a time series of the determined position of the finger 51 (also referred to as a detection finger position). The position controller 101 subtracts the detection finger position indicated by the detection finger position signal from the correction target finger position indicated by the correction target finger position signal. The position controller 101 then generates the control signal 111 for changing the position of the finger 51 by a finger position deviation resulting from subtracting the detection finger position from the correction target finger position, and outputs the control signal 111 to the motor driver 55. The motor driver 55 drives the motor 56 in response to the control signal 111 to cause the position of the finger 51 to approach the correction target finger position. The grip force is thus controlled to approach the target grip force.

In the robotic system 9, the control device 1 and the control device 2 together may be a single control device. The functions of the controller 10 in the control device 1 may be implemented at least partially by the control device 2. At least one of the control device 1 or the control device 2 may control the robot 3 through a network including the Internet. In this case, at least one of the control device 1 or the control device 2 may be, for example, a cloud server. The cloud server may be implemented by multiple computers.

The robotic system and the control device have been described in detail, but the above structures are illustrative in all respects, and the disclosure is not limited to the above structures. The above embodiments may be combined in any manner unless any contradiction arises. Examples other than those illustrated above may also be included without departing from the scope of the present disclosure.

REFERENCE SIGNS

1 control device
11a program
11c first indicator information

| | |
|---|---|
| 11e | second indicator information |
| 50 | holder |
| 52 | force detection sensor |
| 53 | protector |
| 100 | holder controller |
| 107 | correction filter |
| 108 | adjuster |
| 152 | detection signal |

## Claims

**1.** A holder controller for controlling a holder to hold an object with a protector between the holder and the object, the holder controller being configured to control a holding force of the holder based on a viscoelastic characteristic of the protector.

**2.** The holder controller according to claim 1, wherein
the holder controller is configured to control the holding force of the holder based on an environmental change in the viscoelastic characteristic of the protector.

**3.** The holder controller according to claim 1 or claim 2, wherein
the holder controller is configured to control the holding force of the holder based on a change over time in the viscoelastic characteristic of the protector.

**4.** The holder controller according to any one of claims 1 to 3, wherein
the holder controller is configured to control the holding force of the holder based on a change in the viscoelastic characteristic of the protector with use.

**5.** The holder controller according to any one of claims 1 to 4, further comprising:
a correction filter configured to perform first filtering to reduce an effect of the viscoelastic characteristic of the protector.

**6.** A control device for controlling a holder to hold an object, the holder including a sensor configured to detect a holding force of the holder holding the object, and a protector on a sensing portion included in the sensor, the sensor being configured to detect the holding force with the protector between the sensor and the object, the control device comprising:
a holder controller configured to control the holding force in response to a detection signal output from the sensor, the holder controller including a correction filter configured to perform first filtering on the detection signal to reduce an effect of a viscoelastic characteristic of the protector on the detection signal.

**7.** The control device according to claim 6, wherein
the correction filter is configured to perform second filtering on the detection signal or a signal based on the detection signal to reduce an effect of the first filtering in a frequency bandwidth higher than or equal to a control bandwidth of the holder controller.

**8.** The control device according to claim 7, wherein
the correction filter is configured to perform noise reduction on the detection signal or the signal based on the detection signal in the frequency bandwidth higher than or equal to the control bandwidth.

**9.** The control device according to any one of claims 6 to 8, further comprising:
an adjuster configured to adjust a characteristic of the first filtering based on a detection result of a temperature of the protector.

**10.** The control device according to any one of claims 6 to 9, further comprising:
an adjuster configured to adjust a characteristic of the first filtering based on first indicator information being an indicator of a change over time in the viscoelastic characteristic.

**11.** The control device according to any one of claims 6 to 10, further comprising:
an adjuster configured to adjust a characteristic of the first filtering based on second indicator information being an indicator of a change in the viscoelastic characteristic of the protector with use.

**12.** The control device according to any one of claims 6 to 11, wherein the first filtering has a lead filter characteristic.

**13.** The control device according to claim 7 or claim 8, wherein the second filtering has a lag filter characteristic.

**14.** A program for causing a computer to function as the holder controller according to any one of claims 1 to 5.

**15.** A program for causing a computer to function as the control device according to any one of claims 6 to 13.

FIG. 1

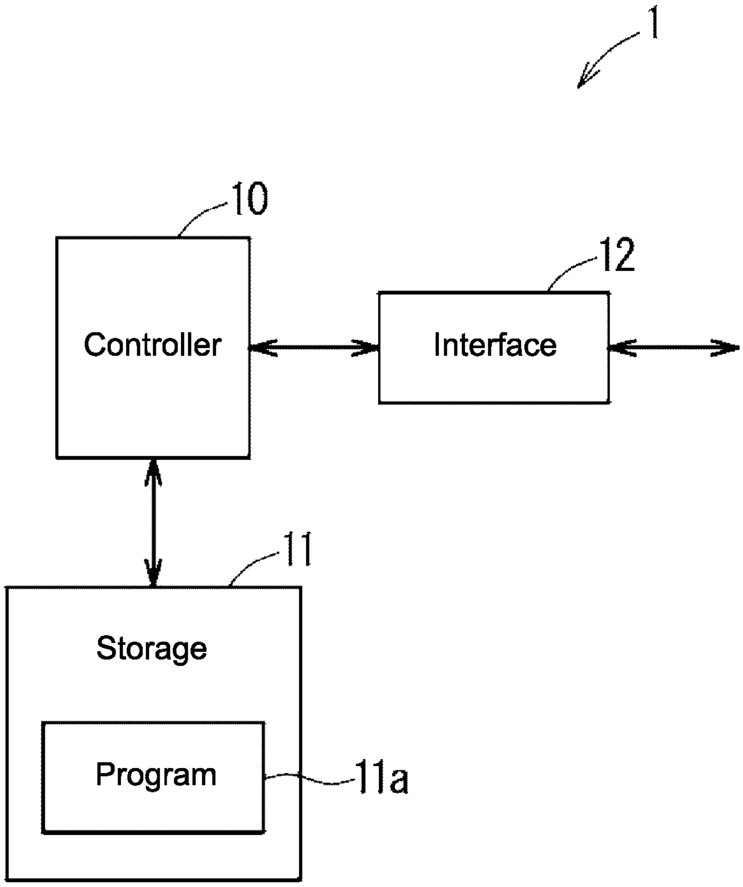
1
10
Controller
12
Interface
11
Storage
Program
11a

FIG. 2

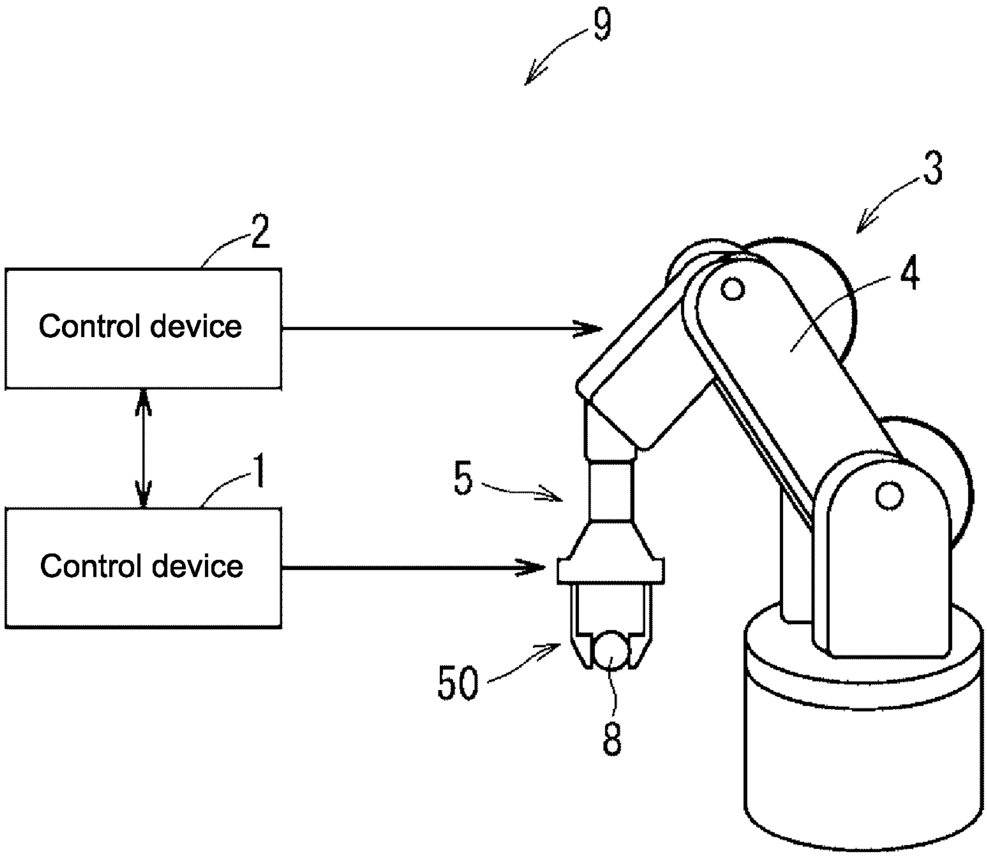
9
3
2
Control device
4
1
Control device
5
50
8

FIG. 3

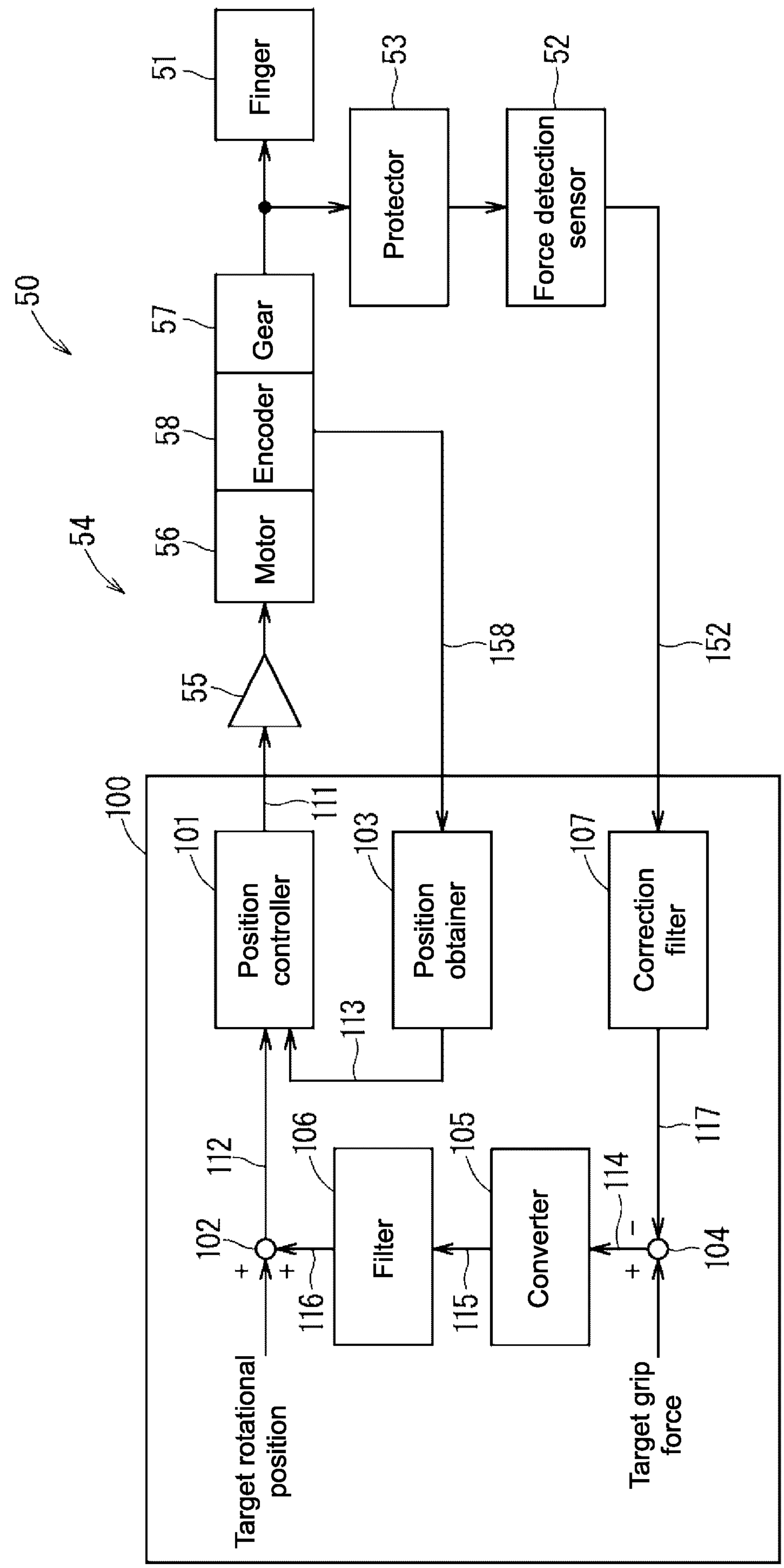
50
54
Finger
51
Protector
53
Force detection sensor
52
Gear
57
Encoder
58
Motor
56
55
158
152
100
Position controller
101
111
Position obtainer
103
113
Correction filter
107
117
Target rotational position
+
102
+
112
Filter
106
116
Converter
105
115
114
−
+
104
Target grip force

FIG. 4

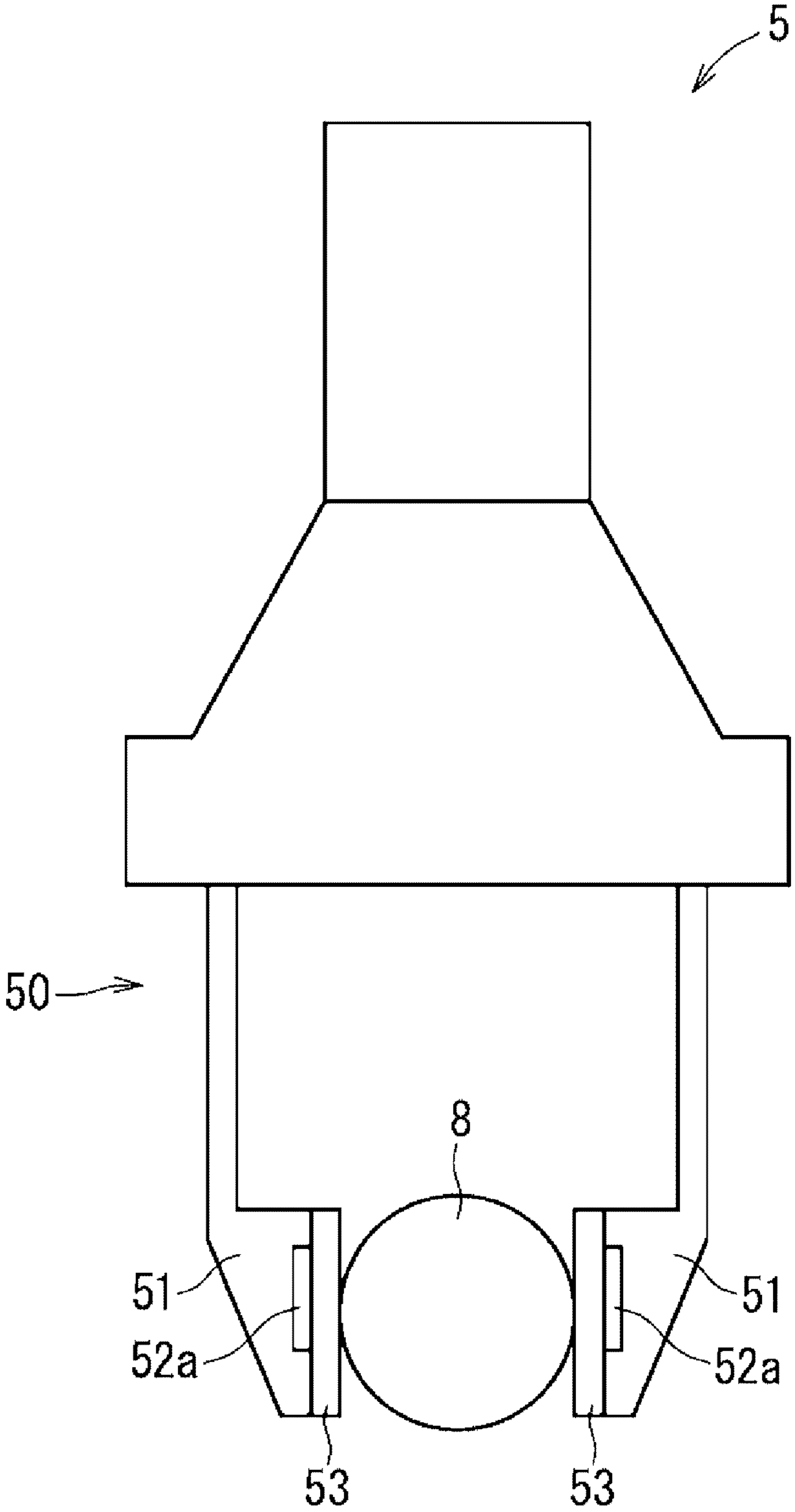

FIG. 5

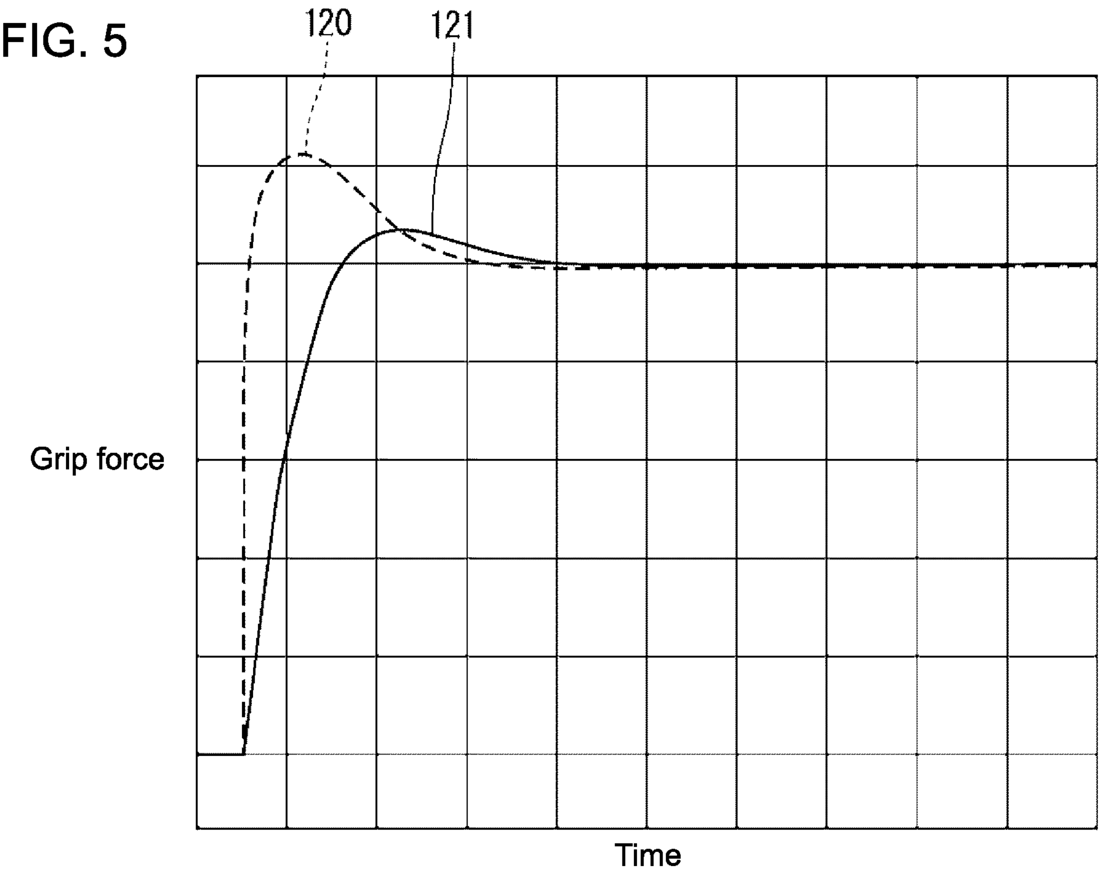


FIG. 6

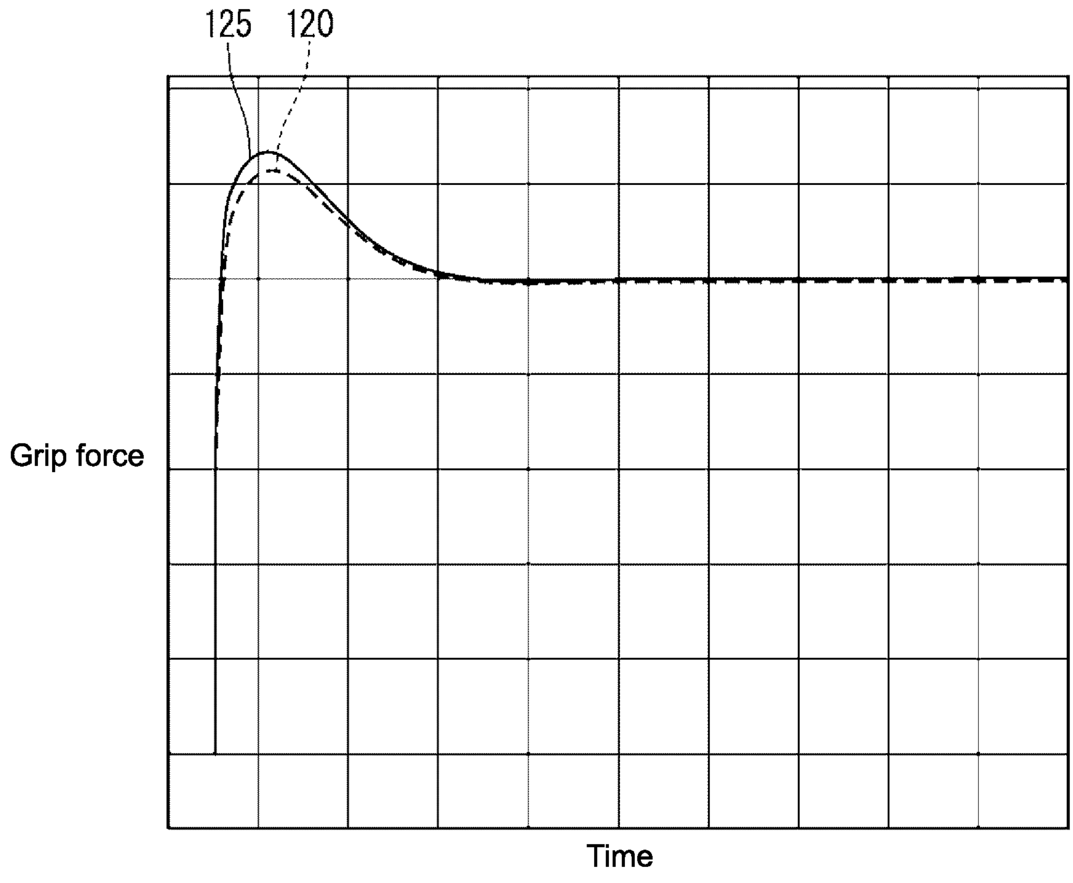

FIG. 7

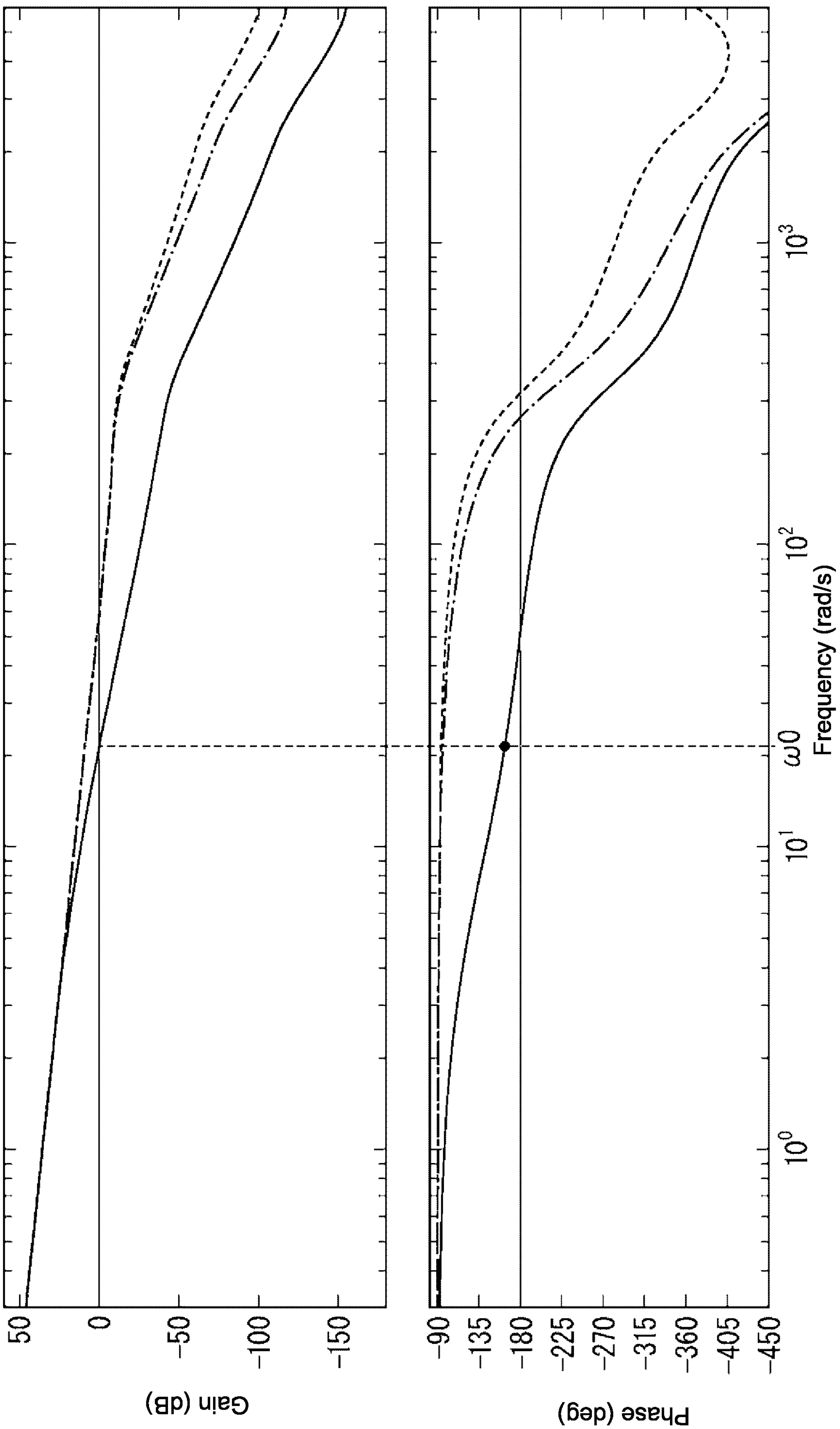

Gain (dB)
50
0
−50
−100
−150
Phase (deg)
−90
−135
−180
−225
−270
−315
−360
−405
−450
$10^0$
$10^1$
$\omega 0$
$10^2$
$10^3$
Frequency (rad/s)

FIG. 8

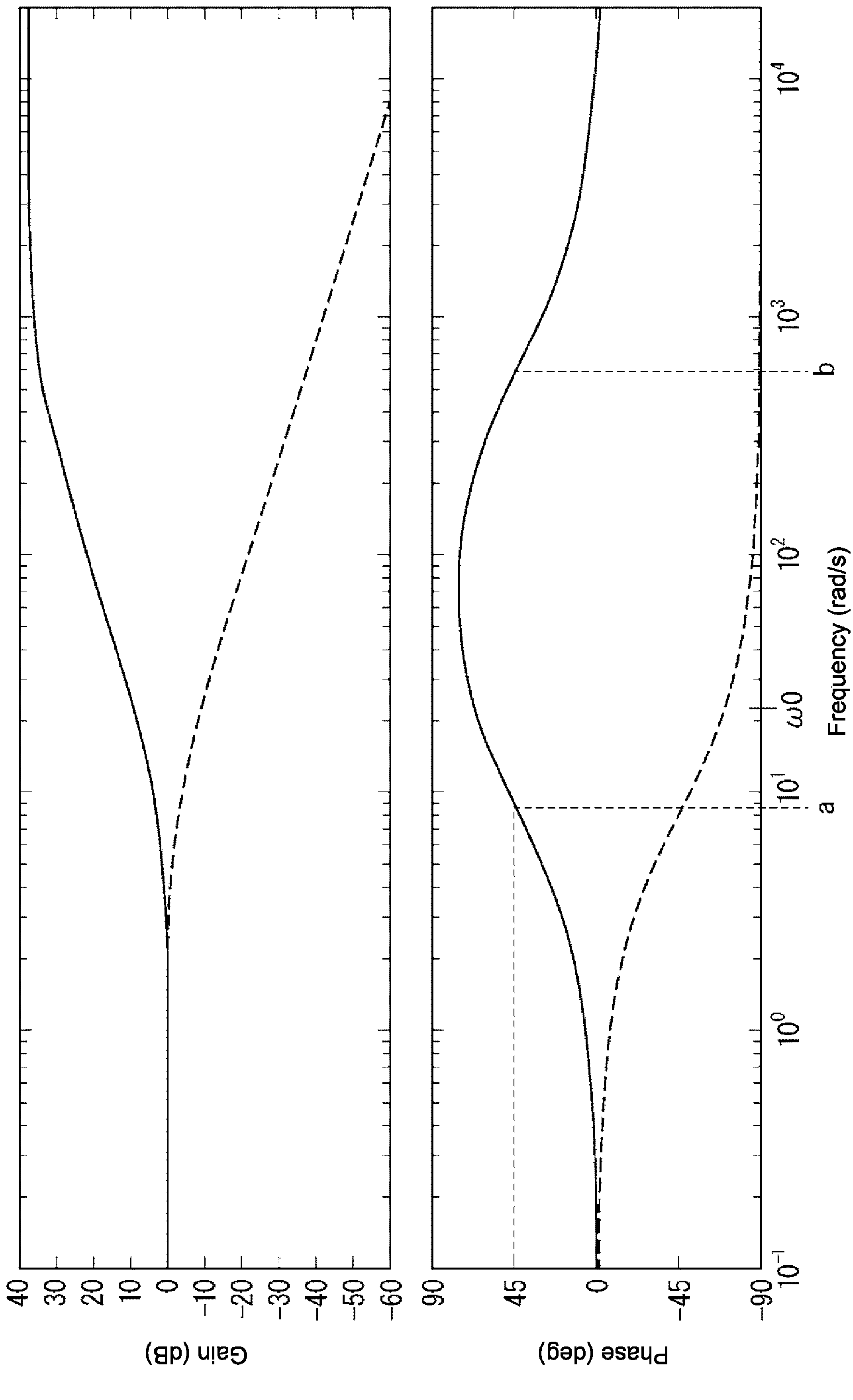
Gain (dB)
40
30
20
10
0
−10
−20
−30
−40
−50
−60
Phase (deg)
90
45
0
−45
−90
$10^{-1}$
$10^{0}$
$10^{1}$
$10^{2}$
$10^{3}$
$10^{4}$
a
ω0
b
Frequency (rad/s)

FIG. 9

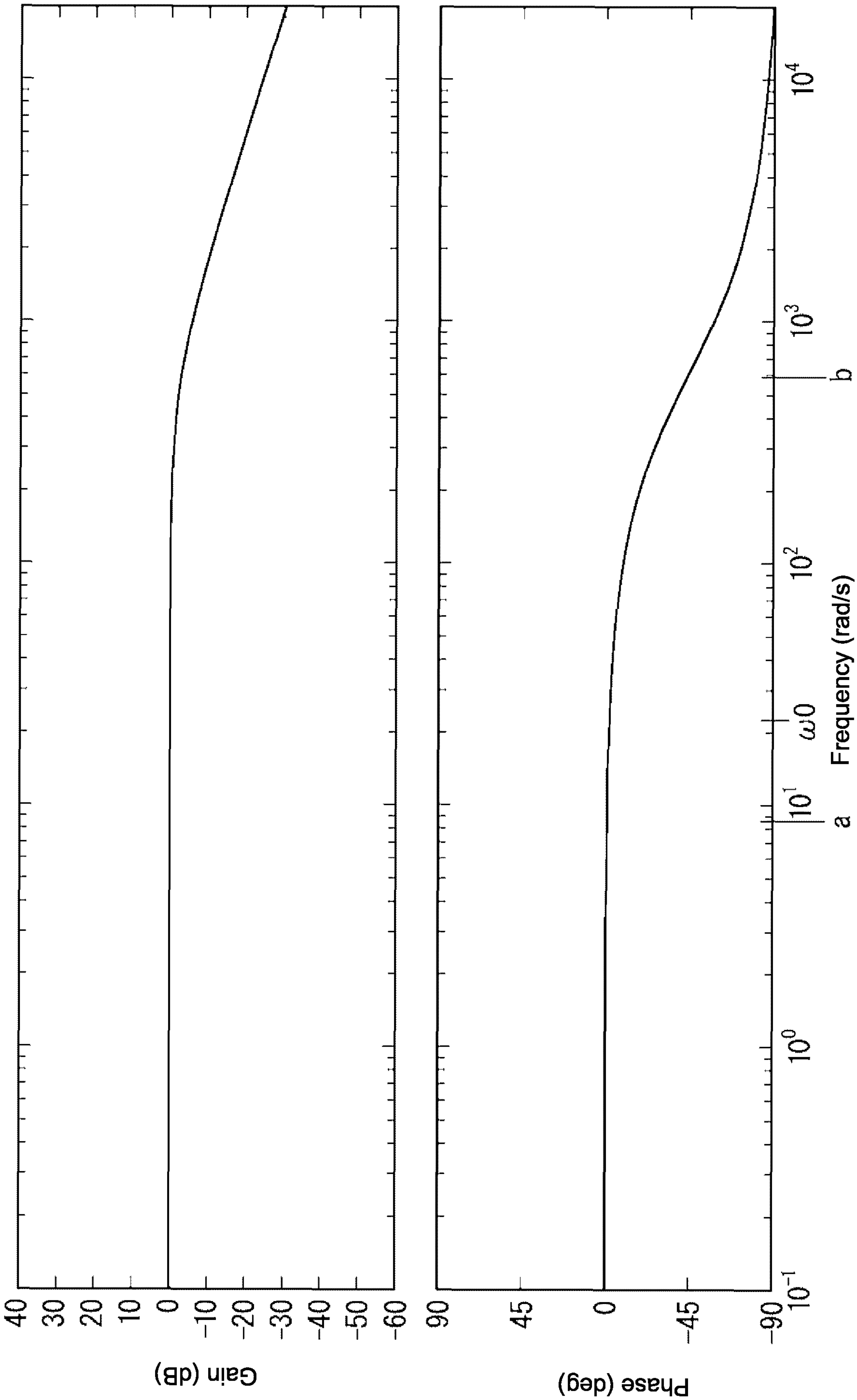
Gain (dB)
40
30
20
10
0
-10
-20
-30
-40
-50
-60
Phase (deg)
90
45
0
-45
-90
$10^{-1}$
$10^{0}$
$10^{1}$
$10^{2}$
$10^{3}$
$10^{4}$
a
ω0
b
Frequency (rad/s)

FIG. 10

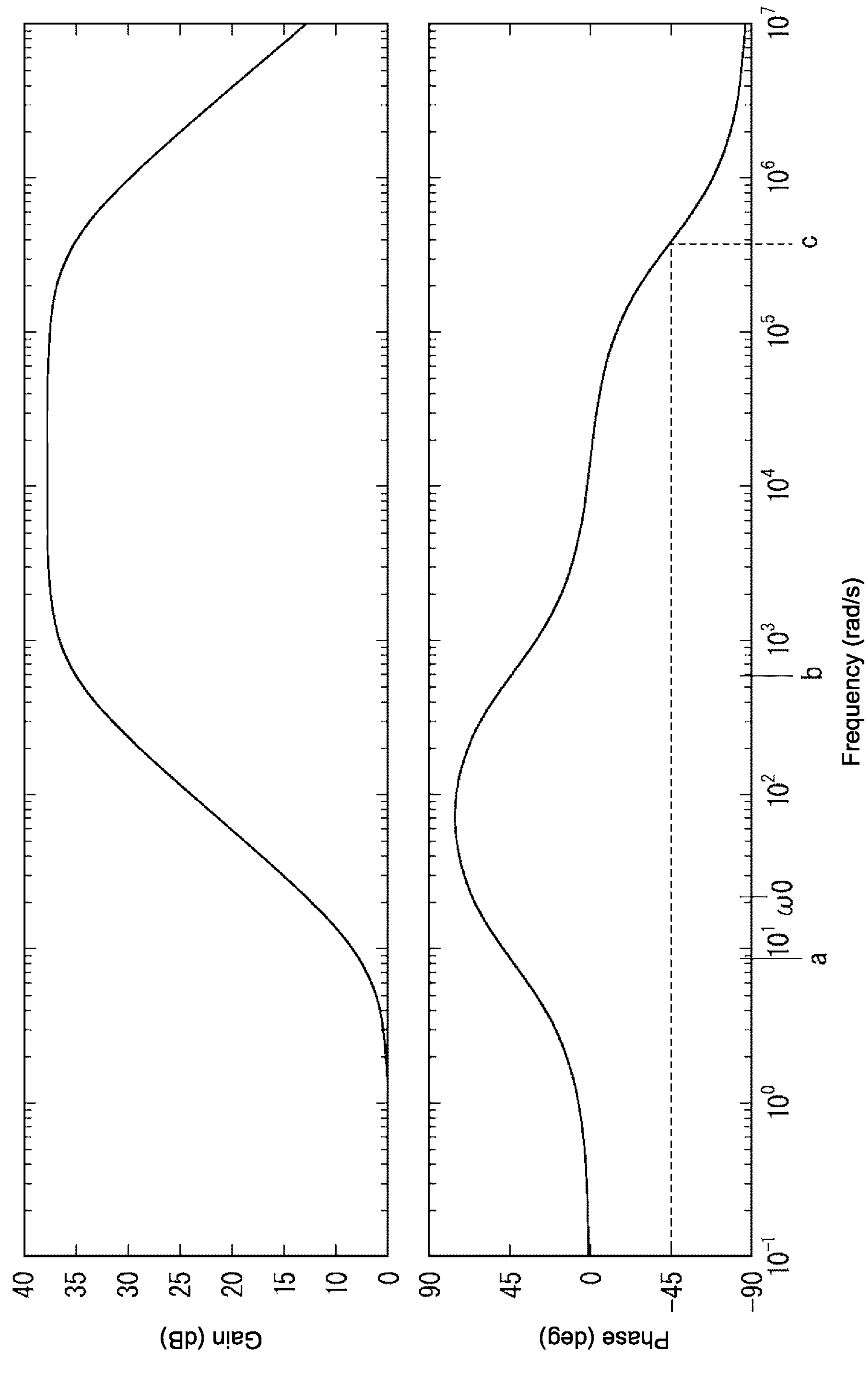
Gain (dB)
40
35
30
25
20
15
10
0
Phase (deg)
90
45
0
−45
−90
$10^{-1}$
$10^{0}$
$10^{1}$
$10^{2}$
$10^{3}$
$10^{4}$
$10^{5}$
$10^{6}$
$10^{7}$
a
ω0
b
c
Frequency (rad/s)

FIG. 11

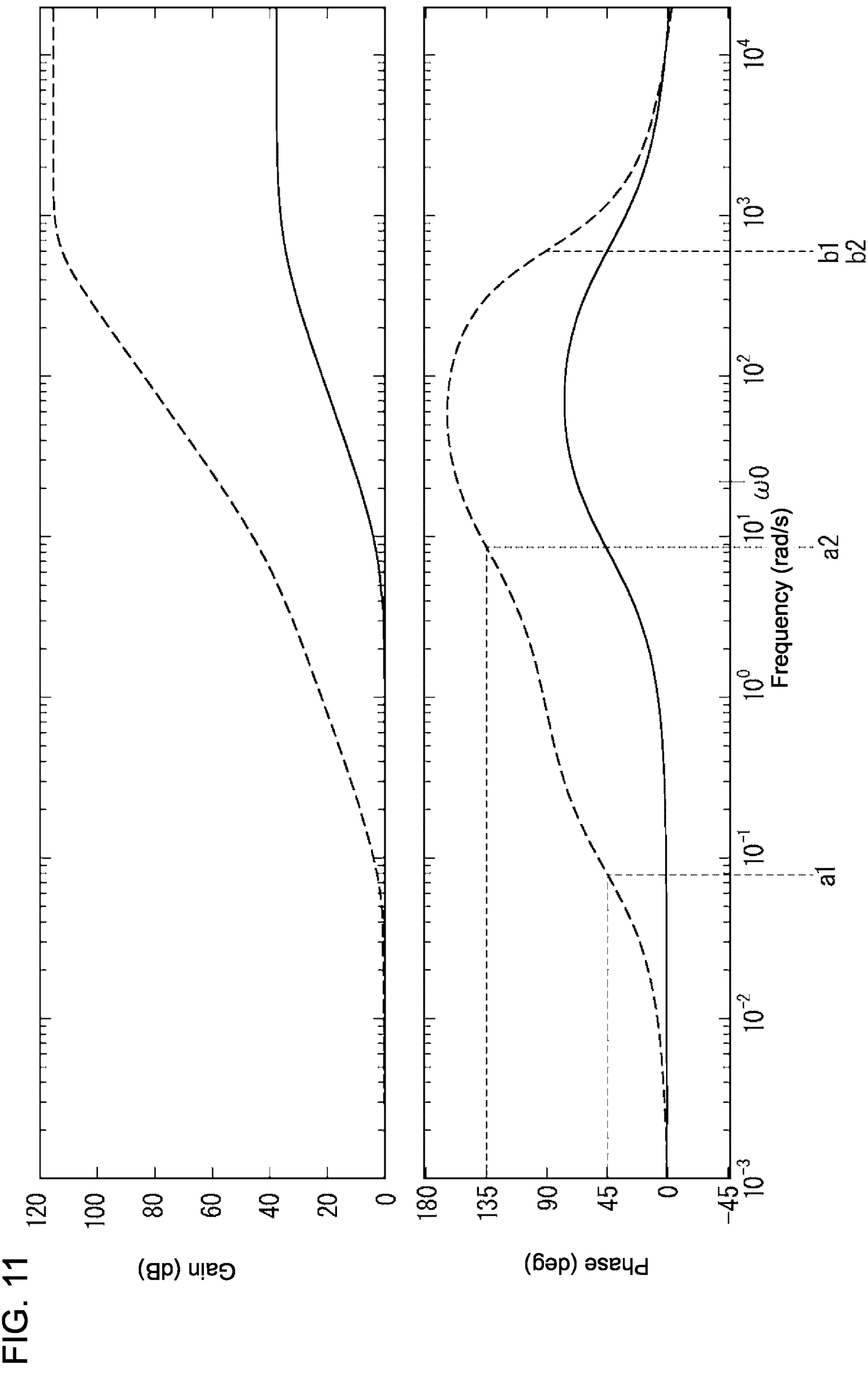
Gain (dB)
120
100
80
60
40
20
0
Phase (deg)
180
135
90
45
0
-45
$10^{-3}$
$10^{-2}$
$10^{-1}$
$10^{0}$
$10^{1}$
$10^{2}$
$10^{3}$
$10^{4}$
Frequency (rad/s)
ω0
a1
a2
b1
b2

FIG. 12

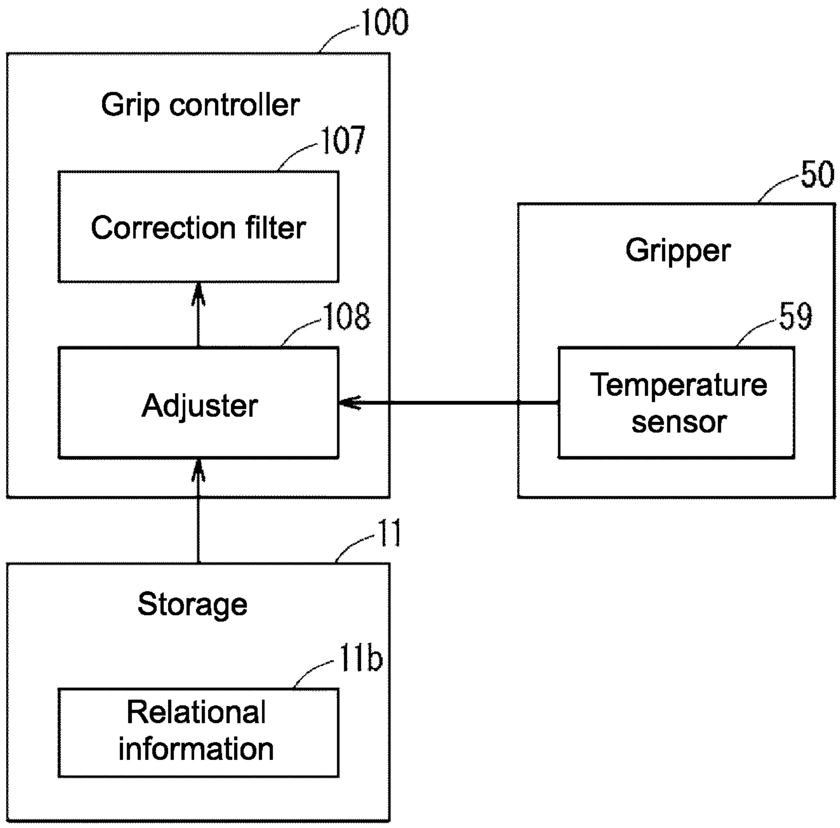
100
Grip controller
107
Correction filter
108
Adjuster
50
Gripper
59
Temperature sensor
11
Storage
11b
Relational information

FIG. 13

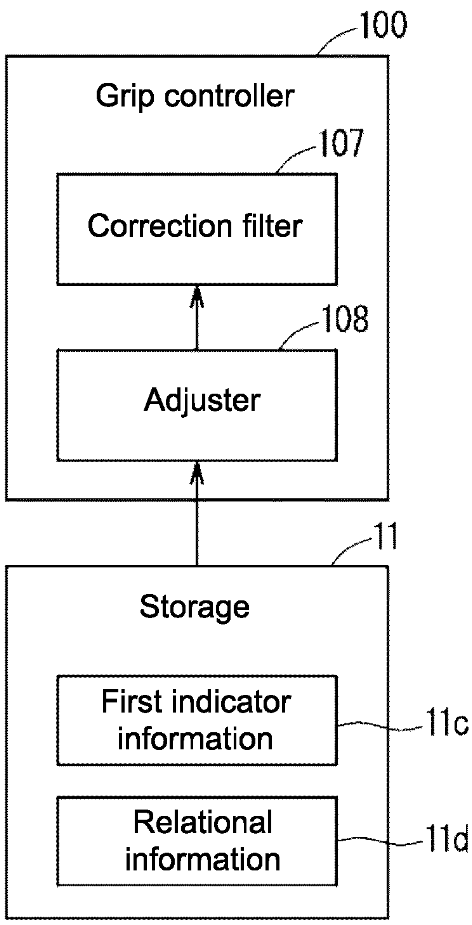
100
Grip controller
107
Correction filter
108
Adjuster
11
Storage
First indicator information
11c
Relational information
11d

FIG. 14

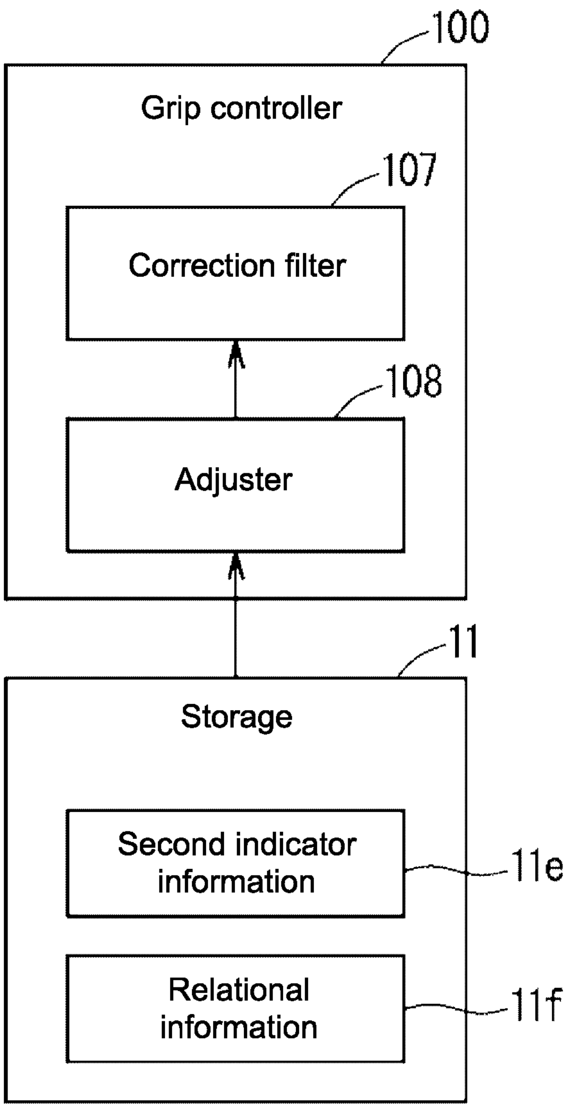
100
Grip controller
107
Correction filter
108
Adjuster
11
Storage
Second indicator information
11e
Relational information
11f

FIG. 15

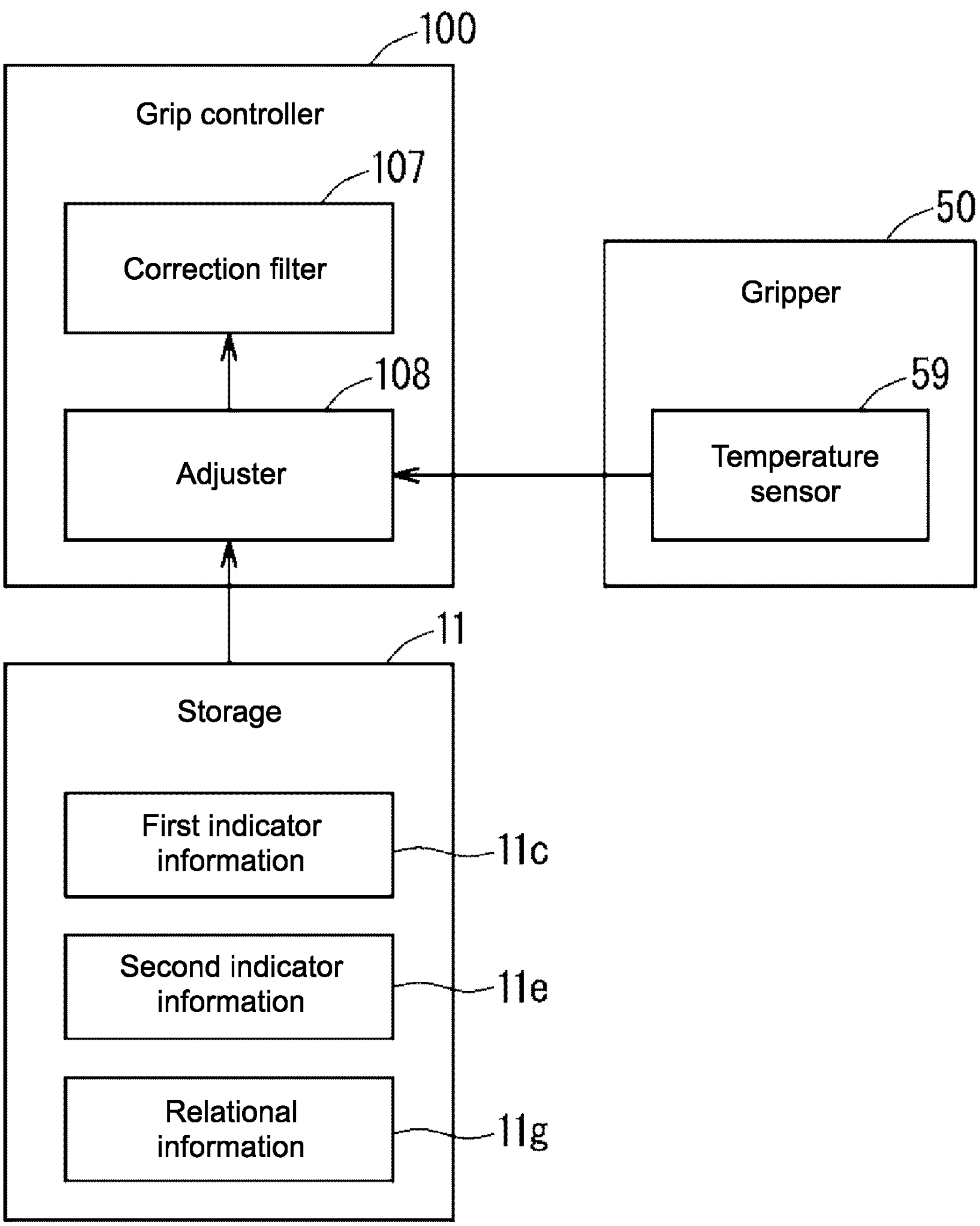
100
Grip controller
107
Correction filter
108
Adjuster
50
Gripper
59
Temperature sensor
11
Storage
First indicator information
11c
Second indicator information
11e
Relational information
11g

FIG. 16

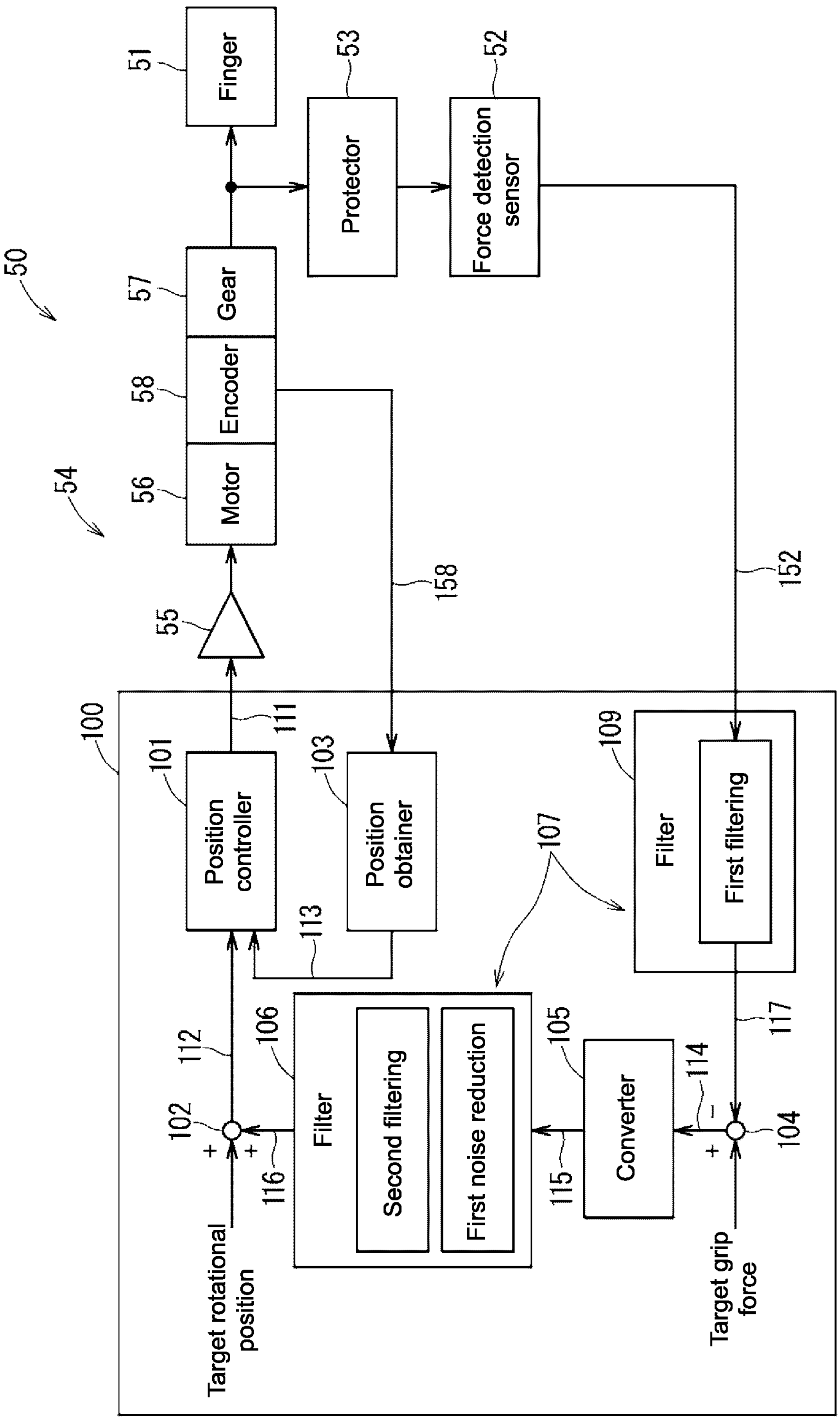

50
54
51
Finger
53
Protector
52
Force detection sensor
57
Gear
58
Encoder
56
Motor
55
158
152
100
101
Position controller
111
103
Position obtainer
113
109
Filter
First filtering
107
106
Filter
Second filtering
First noise reduction
105
Converter
112
102
116
115
114
117
104
Target rotational position
Target grip force

## INTERNATIONAL SEARCH REPORT

International application No.
**PCT/JP2023/011164**

### A. CLASSIFICATION OF SUBJECT MATTER

***B25J 13/08***(2006.01)i; ***B25J 15/08***(2006.01)i
FI: B25J15/08 T; B25J13/08 Z

According to International Patent Classification (IPC) or to both national classification and IPC

### B. FIELDS SEARCHED

Minimum documentation searched (classification system followed by classification symbols)

B25J13/08; B25J15/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 60-215218 A (NIPPON ELECTRIC CO) 28 October 1985 (1985-10-28)<br>p. 5, upper left column, line 2 to p. 6, lower left column, line 5, fig. 1-8 | 1-8, 14-15<br>9-13 |
| Y | JP 2010-286254 A (SEIKO EPSON CORP) 24 December 2010 (2010-12-24)<br>paragraphs [0015]-[0046], fig. 1-12 | 9-13 |
| A | JP 2019-55455 A (CANON KK) 11 April 2019 (2019-04-11)<br>entire text, all drawings | 1-15 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 April 2023** | **25 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/011164**

| Patent document cited in search report | Publication date (day/month/year) | Patent family member(s) | Publication date (day/month/year) |
|---|---|---|---|
| JP 60-215218 A | 28 October 1985 | (Family: none) | |
| JP 2010-286254 A | 24 December 2010 | (Family: none) | |
| JP 2019-55455 A | 11 April 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013113661 A